# EUROPEAN PATENT SPECIFICATION

(11) **EP 4 342 195 B1**
(45) Date of publication and mention of the grant of the patent: **03.12.2025**
(21) Application number: 22730695.8
(22) Date of filing: 18.05.2022
(51) Int. Cl.: H04W 4/02, H04W 12/104, H04W 12/61, H04W 12/069

(54) **METHOD AND APPARATUS FOR PROVIDING TIME VALID LOCATION BASED INFORMATION**
VERFAHREN UND VORRICHTUNG ZUR BEREITSTELLUNG VON ZEITLICH GÜLTIGEN ORTSBEZOGENEN INFORMATIONEN
PROCÉDÉ ET APPAREILS POUR FOURNIR DES INFORMATIONS BASÉES SUR UN EMPLACEMENT VALABLE DANS LE TEMPS

(30) Priority: 19.05.2021 EP 21174666
(43) Date of publication of application: 27.03.2024
(73) Proprietor: HERE Global B.V., 5611 ZT Eindhoven (NL)
(72) Inventor: LANFRANCHI, Giovanni, 10115 Berlin (DE); KONDRASHOV, Oleksandr, 10115 Berlin (DE); DERIN, Onur, 5611 ZT Eindhoven (NL); OVERBEEK, Edzard, 5611 ZT Eindhoven (NL)
(74) Representative: Potter Clarkson
(86) International application number: PCT/EP2022/063456
(87) International publication number: WO 2022/243382

(56) References cited:
- WO-A1-2021/030877
- FOAMSPACE CORP: "FOAM Technical Whitepaper Draft 0.4 Contents", 4 May 2018 (2018-05-04), pages 1 - 32, XP055862154, Retrieved from the Internet <URL:https://github.com/f-o-a-m/public-research/raw/master/FOAM%20Techincal%20Whitepaper%20Draft.pdf> [retrieved on 20211116]
- FOAMSPACE CORP: "FOAM Whitepaper", 5 January 2018 (2018-01-05), pages 1 - 23, XP055514022, Retrieved from the Internet <URL:https://www.foam.space/publicAssets/FOAM_Whitepaper.pdf> [retrieved on 20181010]
- NASRULIN BULAT ET AL: "A Robust Spatio-Temporal Verification Protocol for Blockchain", 20 October 2018, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 52 - 67, ISBN: 978-3-642-17318-9, XP047491659
- ROTH J: "Flexible Positioning for Location-Based Services", INTERNET CITATION, 3 June 2003 (2003-06-03), XP002388044, Retrieved from the Internet <URL:http://www.informatik.fh-nuernberg.de/professors/roth/paper/IADISWWWI_Journal.pdf> [retrieved on 20060101]

## Description

### BACKGROUND

The present disclosure relates to apparatus, systems and methods for providing time-valid location-based information, and in particular, although not necessarily, for providing information about a location of a client device and/or information for a client device at a location.

FOAM Technical Whitepaper Draft 0.4, https://github.com/f-o-a-m/public-research/raw/master/FOAM%20Techincal%20Whitepaper%20Draft.pdf, discloses an expanded form of Proof of Location which is intended to supplement Static Proof of Location, potentially providing Proof of Location functionality to transitory things.

FOAM Whitepaper, https://www.foam.space/publicAssets/FOAM_Whitepaper.pdf, discloses, FOAM, is an open protocol for decentralized, geospatial data markets. The component elements of the FOAM protocol are designed to provide spatial protocols, standards and applications that bring geospatial data to blockchains. Token mechanisms and cryptoeconomics underpin the elements of FOAM.

Nasrulin, B., Muzammal, M., Qu, Q. (2018). "A Robust Spatio-Temporal Verification Protocol for Blockchain". In: Hacid, H., Cellary, W., Wang, H., Paik, HY., Zhou, R. (eds) Web Information Systems Engineering - WISE 2018. WISE 2018. Lecture Notes in Computer Science, vol 11233. Springer, Cham. https://doi.org/10.1007/978-3-030-02922-7_4 discloses a proof-of-location protocol on top of a permissioned blockchain. The protocol is instrumented by the implementation of an access control model and utilises a set of verification rules to create and verify spatio-temporal data points.

Roth J., "Flexible Positioning for Location-Based Services", http://www.informatik.fh-nuernberg.de/professors/roth/paper/IADISWWWI_Journal.pdf, discloses a platform, which hides specific details of positioning systems and pro-vides a uniform output containing both physical as well as semantic information. The corresponding infrastructure reflects a location domain model designed to cover the needs of mobile users. The domain model contains logical links and allows the expression of semantic relations between locations.

### SUMMARY

The present invention comprises a computer-implemented method, system, computer program product, and computer-implemented data structure for providing time-valid location-based information as defined by the claims. Embodiments that do not fall within the scope of the claims should be regarded as examples useful for understanding the present invention.

According to a first aspect of the present disclosure there is provided a computer-implemented method for providing time-valid location-based information. The method comprises:
for an environment, defining a plurality of cells, each cell comprising:
   a respective location with a range based on a geographical extent of the respective cell within the environment;
   a respective predetermined validity-time-interval;
   respective semantic-location-data relevant to the respective location;
   respective executable code instructions configured to operate on the respective semantic-location-data to enable determination of respective time-valid location-based information upon execution of the respective code instructions by a first edge computing apparatus proximal to the respective location;
wherein the respective time-valid location-based information is valid within the respective predetermined validity-time-interval.

Optionally, the geographical extent of the respective cell of the plurality of cells may be a 3-dimensional-geographical-extent.

Optionally, the first edge computing apparatus may be configured to execute the respective code instructions on the respective semantic-location-data to generate a signed certificate comprising the respective time-valid location-based information for the cell; a second edge computing apparatus proximal to the respective location may be configured to: execute the respective code instructions on the respective semantic-location-data to generate validation information; and when the signed certificate matches the validation information to within a predetermined threshold, validate the signed certificate to provide a validated signed certificate.

Optionally, for a respective cell of the plurality of cells: the respective semantic-location-data may comprise presence-data representative of a first-indication-of-presence of a client-device within the geographic extent of the respective cell; the signed certificate may be representative of the first-indication-of-presence of the client-device within the geographic extent of the respective cell; the validation information may be representative of a second-indication-of-presence of the client-device within the geographic extent of the respective cell; the signed certificate matches the validation information when an overlap between the first-indication-of-presence and the second-indication-of-presence satisfies an overlap criterion; and when the signed certificate matches the validation information, the validated signed certificate comprises location-data representative of the location of the client-device within the respective cell.

Optionally, when the validated signed certificate comprises location-data representative of the location of the client-device within the respective cell, providing the client-device with access to cell-information relevant to the respective cell.

Optionally, when the validated signed certificate comprises location-data representative of the location of the client-device within the respective cell, enabling the client-device to communicate with a second-device present in the respective cell.

Optionally, the plurality of cells may comprise: a first cell; a second cell; a third cell; and wherein: the first cell may be related to the second cell by a first mapping; the second cell may be related to the third cell by a second mapping; the first cell may be related to the third cell by a third mapping comprising a product of the first mapping with the second mapping; and the third cell may comprise a union of the first cell and the second cell.

Optionally, the plurality of cells may comprise: a first cell; a second cell; a third cell; and wherein the third cell may be formed from an operation on the first cell and the second cell.

Optionally, the operation may comprise at least one of: a union of the first cell and the second cell; an intersection of the first cell and the second cell; a relative complement of the first cell in the second cell; a symmetric difference of the first cell and the second cell; a distance between the first cell and the second cell; and a selection of a pair of points from the first cell and the second cell respectively.

Optionally, the operation may relate to: (i) the geographical extent; (ii) the predetermined validity-time-interval; or (iii) a combination of the geographical extent and the predetermined validity-time-interval, of the first cell and of the second cell.

Optionally, the third cell may be formed from an operation that comprises a map object of a map database.

Optionally, when a validated signed certificate comprises location-data representative of a presence of a first-client-device within the first cell, providing the first-client-device access to one or more of: second-semantic-location-data relevant to the second cell; a second-device within the second cell; third-semantic-location-data relevant to the third cell; and a third-device within the third cell.

Optionally, the first cell may be geographically spaced apart from the second cell such that the first cell may be non-overlapping and non-coterminous with the second cell.

Optionally, the third cell may comprise an intermediate-cell, different than the first cell and the second cell. When the validated signed certificate comprises location-data representative of a presence of the first-client-device within the first cell, providing first-cell-functionality to the first-client-device. When the validated signed certificate comprises an intermediate signed certificate that comprises intermediate-location-data representative of a presence of the first-client-device within the intermediate cell, providing an intermediate-cell-functionality to the first-client-device, wherein the intermediate-cell-functionality may be different than the first-cell-functionality.

Optionally, defining a blockchain operative on an edge computing network comprising the first edge computing apparatus; defining a smart contract for a cell of the plurality of cells, wherein the smart contract may comprise the respective executable code instructions for the cell; executing, using the first edge computing apparatus, the smart contract on the respective semantic-location-data for the cell to provide a signed certificate comprising the respective time-valid location-based information for the cell; and writing the signed certificate into the blockchain.

Optionally, the smart contract may comprise a scope configured to define an executability condition for the respective executable code instructions.

Optionally, the executability condition may determine one or more users allowed to execute the smart contract.

Optionally, the one or more users may be allowed to execute one or more of a read-operation and a write-operation.

Optionally, the executability condition determines one or more roles allowed to execute the smart contract, the one or more roles associated with one or more users.

Optionally, the one or more roles may specify that the one or more users can execute one or more of a read-operation and a write-operation.

Optionally, the executability condition may further determine that the smart contract can perform the one or more procedures on one or more of the plurality of cells.

Optionally, the executability condition may further determine that each of the one or more roles are allowed to execute the smart contract on non-overlapping cells of the plurality of cells.

Optionally, the executability condition may further determine that a user associated with one of the one or more roles can execute the smart contract on a cell of the plurality of cell when the user is present within the cell.

Optionally, the executability condition may determine that the smart contract can perform one or more of a read operation and a write operation.

Optionally, the executability condition determines that the smart contract can perform one or more procedures on one or more of the plurality of cells.

Optionally, the edge computing network comprises the second edge computing apparatus, the method comprising: executing, using the second edge computing apparatus, the smart contract on the respective semantic-location-data to provide validation information; and when the validation information matches the signed certificate to within a predetermined threshold, writing a validated signed certificate, comprising the respective time-valid location-based information, to the blockchain.

Optionally, the validated signed certificate may be configured to provide the respective time-valid location-based information for the cell to one or more of: the cell; an object associated with the cell; a different cell of the plurality of cells; and a different object associated with the different cell.

Optionally, the respective semantic-location-data may comprise information relevant to one or more of: one or more available parking spaces; one or more pedestrian exits; one or more elevators and/or escalators.

Optionally, the respective time-valid location-based information may comprise content relevant to one or more of: a position of one or more of the available parking spaces; a relative proximity of two or more respective parking spaces of the one or more available parking spaces; a size of one or more of the available parking spaces; a relative proximity between the one or more parking spaces and: the one more pedestrian exits; and/or the one or more elevators and/or escalators; a relative proximity between the one or more pedestrian exits and the one or more elevators and/or escalators.

Optionally, the respective executable code instructions may comprise a Structured Query Language functionality.

According to a further aspect of the present disclosure there is provided a system configured to provide time-valid location-based information for an environment comprising a plurality of cells, each cell comprising:
a respective location with a range based on a geographical extent of the respective cell within the environment;
a respective predetermined validity-time-interval;
respective semantic-location-data relevant to the respective location;
respective executable code instructions configured to operate on the respective semantic-location-data to enable determination of respective time-valid location-based information. The system may comprise: a first edge computing apparatus proximal to the respective location of the respective cell of the plurality of cells, the first edge computing apparatus may be configured to execute the respective code instructions to enable determination of the respective time-valid location-based information, and wherein the respective time-valid location-based information may be valid within the respective predetermined validity-time-interval.

According to a further aspect of the present disclosure there is provided a computer program product, or a computer readable memory medium, including one or more sequences of one or more instructions which, when executed by one or more processors, cause an apparatus or system to at least perform the steps of any method disclosed herein.

According to a further aspect of the present disclosure there is provided a computer-implemented data structure for providing time-valid location-based information for an environment defined by a plurality of cells, each cell comprising a respective location with a range based on a geographical extent of the respective cell within the environment, the data structure comprising data defining:
a respective predetermined validity-time-interval;
respective semantic-location-data relevant to the respective location; and
respective executable code instructions configured to operate on the respective semantic-location-data to enable determination of respective time-valid location-based information upon execution of the respective code instructions by a first edge computing apparatus proximal to the respective location;
wherein the respective time-valid location-based information is valid within the respective predetermined validity-time-interval.

Optionally, the data structure may further define a blockchain operative on an edge computing network comprising the first edge computing apparatus; and a smart contract for a cell of the plurality of cells, wherein the smart contract comprises the respective executable code instructions for the cell.

While the disclosure is amenable to various modifications and alternative forms, specifics thereof have been shown by way of example in the drawings and will be described in detail. It should be understood, however, that other embodiments, beyond the particular embodiments described, are possible as well. The invention is defined by the appended claims.

The above discussion is not intended to represent every example embodiment or every implementation within the scope of the current Claim set. The Figures and Detailed Description that follow also exemplify various example embodiments. Various example embodiments may be more completely understood in consideration of the following Detailed Description in connection with the accompanying Drawings.

### BRIEF DESCRIPTION OF DRAWINGS

One or more embodiments will now be described by way of example only with reference to the accompanying drawings in which:
Figure 1 shows a schematic representation of a plan view of a TensorCell;
Figure 2 shows a tiling scheme based on quadtrees;
Figure 3 shows a representation of a 3D tiling scheme;
Figure 4 shows a schematic representation of the functionality provided by tensor query language;
Figure 5 shows alternative tiling schemes;
Figure 6 shows hierarchical hexagonal tiling schemes;
Figure 7 shows TensorLocation Fabric;
Figure 8 shows a representation of a TensorLocation Channel system;
Figure 9 shows a location verification process;
Figure 10 shows TensorCell sets in 2D;
Figure 11 shows a map with overlapping locations;
Figure 12 shows a schematic diagram of the structure of a TensorLocation Database;
Figure 13 shows a Category which is a collection of objects related by a set of morphisms;
Figure 14 shows a schematic diagram of a Functor;
Figure 15 shows a diagram of a deployment model;
Figure 16 shows an overview of the process for accessing multi-access edge computing (MEC) services by a probe client;
Figure 17 shows a schematic diagram of the TensorLocation claim of presence;
Figure 18 shows a schematic diagram of the TensorLocation object recognition process;
Figure 19 shows steps required to enable a smart store in TensorLocation;
Figure 20 shows an example of IoT sensor data transactions on TensorLocation;
Figure 21 shows an example of cooperative mapping;
Figure 22 shows an example of cooperative mobility;
Figures 23a and 23b show examples of a cooperative mapping dangerous curve application;
Figure 24 shows an example of private mapping;
Figure 25a shows an example of a context-aware parking booking initialization system;
Figure 25b shows an example of an operational context aware parking booking system;
Figure 26 shows an example of a computer program product
Figure 27 shows an example of a data structure;
Figure 28 shows main components of a TensorLocation system; and,
Figure 29 shows a schematic representation of an apparatus.

### DETAILED DESCRIPTION

Existing location systems are built on a set of key design principles based on the Mercator 16th century assumptions: a rigid and static geocoding system; Z dimension (altitude) and time not intrinsically part of the geolocation system; and a library which may allow 'matching' physical objects to the underlying location reference not intrinsically included as part of the location system itself.

To be ready for a set of use cases for a 'machine-to-machine' autonomous world, rather than attempt to incrementally improve existing approaches, it is necessary to profoundly innovate and establish a new fundamental atomic building block as the basis for a new location system: the 'TensorCell', which may also be referred to as a 'cell' which relates to a portion of an environment, where the environment can be divided into any number of distinct cells.

A central platform cannot serve the large number of autonomous objects (e.g., vehicles) given the highly dynamic high-definition map they require. There are emerging trends that may enable a better solution, including edge computing, federated learning, and distributed ledger technology.

Edge computing enables low latency mapping suitable for automotive use cases by bringing the processing and storage of the map closer to vehicles. Federated learning enables sharing, reduces data rate requirements and favors privacy. Distributed ledger technology (DLT) enables trust, incentives for participation and cooperative autonomous driving use cases.

Ad-hoc development of a solution on top of these technologies would be too costly for almost any organization. TensorLocation, which is built on the concept of TensorCells, presents an architectural solution template that is easy to onboard. TensorLocation is a framework for TensorCells that enables users to deploy an application at the edge (e.g., Multi Access Edge Computing (MEC)) based on new SDKs (Software Development Kits) that expose high performance, low latency data storage; a map inference engine based on federated learning; and consensus services for sharing and cooperation on the road.

TensorLocation is a next generation Location as a System that can operate on top of edge computing, federated learning and distributed ledger technology. At a high level, a TensorLocation is a new framework that allows the easy manipulation of TensorCells, which are a representation of a user driven semantic 2D or 3D segmentation of 'space - time'.

TensorLocation can involve an ecosystem of:
- Telecom providers (e.g. providing MEC);
- Big enterprises (e.g. OEMs/car manufacturers, T&L etc.);
- Location Based Services (LBS) providers such as HERE Technologies, as a neutral enabler providing the platform.

Specifically, a TensorCell representation can have the following characteristic elements:
a) Crypto coordinates identifying a spatial location. The location for a particular cell has a range covering a particular geographical extent within an environment, where the range could be either 2-dimensional or 3-dimensional.
b) A time range of validity. This time range is an example of predetermined validity-time-interval that may last any number of seconds, minutes, hours or days etc.
c) Metadata describing executable behavior or if the TensorCell is part of a set of groups.
d) An executable or programmable kernel (that is, what the cell does in response to a specified set of events) including all relevant event slots. The Executable kernel is executable code instructions that operates on semantic location data to provide time-valid (in accordance with the time range of validity) location-based information.
e) Networks of other TensorCells as providers / consumers
f) Semantic relationships (which can be called semantic location data, that is relevant to the location):
   a. Supporting higher level static feature type classes (e.g., a road, a building, or other infrastructure for example) and any dynamic situational feature (such as a traffic accident scene, for example)
   b. Basic set theoretic relationships such as contains, belong to, etc.
   c. User defined relationships.

For use cases in which the system is operated by a single stakeholder, the semantic location data could be based on an ad-hoc category system (e.g., type: product::beverage::alcoholic::beer). In systems with multiple parties the semantic location data might instead be based on an open domain ontology (e.g. Schema.org) for discoverability and interoperability purposes.

The executable kernel can be executed by a computing device, which in some examples may be an edge computing device, such as mobile edge computing device, although the edge computing device can also be a fixed edge computing device in other examples. Generally, the computing device that executes the executable kernel will be proximal to the location in order to maintain low latency in communicating information with devices contained within the location. The devices within the location can be known client devices, and can be any form of user device or user equipment and may be either fixed or mobile devices.

An MEC-level dynamic map is a high performance geo-spatial-temporal engine that handles storage and processing of TensorCells. Map inference engines can expose federated learning as a service enabling better models at the vehicle-level without sharing too much raw data; stores and runs neural models for inferencing at the MEC-level to maintain the MEC-level dynamic map.

DLT/Consensus services provide Byzantine fault tolerant transactions and consensus as a service to enable use cases that require DLT. It is not realistic to expect uninterrupted communication between a vehicle and the MEC provider due to bad signal coverage in certain areas or intermittent disruptions in the network. A fault tolerant communication is needed to keep track of data transactions. Smart contracts can trigger modifications on the dynamic map based on transactions from vehicles.

One possible consensus service is location verification. Use cases of TensorLocation could be vulnerable to fraud attacks if the location reported by a 3rd party is trusted without validation. With the advances in 5G positioning and that capability becoming available via the Location API at MEC-level, it will be possible to get location validation at MEC-level from the mobile network operator. Instead of using the location from the mobile network operator, a more privacy-preserving solution could be achieved by obtaining the location from the vehicle and validating it via the mobile operator. Even though location verification can be considered as a use case for TensorLocation, it is a basic building block that can power trusted applications on the TensorLocation platform.

At very high level a TensorLocation can be considered as a Location Intelligence enabling system that:
1. Provides a Geohash based 2D and/or 3D grid representation of the physical world (such as may be partitioned into TensorCells);
2. Provides a 'quasi-real-time' mapping physical objects and dynamic situations into the supporting TensorCells;
3. Provides a set of TensorCell operators (algebra) which allows TensorCell manipulation and personalization;
4. Reverses the traditional 'location' paradigm from being 'map centric' ('the same location system for everyone' so a user needs to understand the map and find the best way to fit in to the system) to a 'user centric' platform ('everyone has their own location system' so the 'location system' a user is using is configured to take into account that user's needs, use cases and characteristics). This means that, besides the 'public' content visible to everyone (e.g. the current user is currently in Invalidenstrasse 116 [or any other location]), TensorLocation naturally allows to manage and convey contextual and personalized location intelligence information (e.g. if a user is a courier close to InvalidenStrasse it provides a reminder of the number of parcels the user/courier needs to deliver before 10am, for example)
5. Allows high degree of horizontal scale out and parallelism: the TensorCells can be federated but fully decoupled.

Before considering the technology blueprint in detail for TensorLocation it may be valuable to also outline some of its characteristics and profound novelties at a high level:
- TensorLocation is not just a new geolocation system but it is inherently a new space-time reference enabling system: in TensorLocation space and time have same level of 'dignity' and same set of enabling operators. Everything in TensorLocation is dynamic and streaming by default. As an analogy, it is possible to consider that a classical geolocation system compares with TensorLocation as classical Newton physics compares with Einstein's relativistic theory.
- TensorLocation is a federated peer-to-peer network. Moreover, every cell need not be just a flat segmentation of the physical world but is an executable unit that may react through some custom logic (comparable to blockchain 'smart contracts', as an analogy) in front of a set of events. This can unleash an essentially infinite number of possibilities for different applications especially in the IoT (Internet of Things) space.
- With an enabling frame such as TensorLocation it can become quite natural to develop a digital twins model. In fact, one of the major challenges in digital twin development concerns the synchronization of the static content of the model with its dynamic behavior, which can be taken into account by TensorLocation and made transparent to the user.
- At a high level it is possible to consider TensorLocation as a system that allows a simple algebra across TensorCells with built-in spatiotemporal and semantic operators and transformers.
- In the same way, in TensorLocation everything can be private and personal by default. This is different from existing location systems where the location content is general and public and a user may have the ability to insert a 'private layer' with all the related difficulties to maintain cross-referencing and consistency, whereas in TensorLocation every user can have their own personal and private TensorLocation network with automatic and native consistency checks and continuous cross referencing validation with 'ground truth' (such as a confidence indicator dynamic value).
- TensorLocation enables trusted positioning down to the micro level allowing agents to move in time and space and have bi-directional operation with cells and other agents.
- TensorLocation does not have a server centric architecture (as do the traditional location systems) but instead is highly federated, consistent with the role of edge computing. This provides various advantages, such as:
   ∘ System scalability and easy sharing mechanisms
   ∘ The exchanged 'bits' of information need no longer be raw sensor data (as it is the case in existing location systems, with the server required to centrally transform massive amount of sensor data into location content) but rather 'neural models quantum' shared across the federated network and combined through TensorCell tensor algebra operations.

### Intelligent Micro Elements

The TensorCell is an atomic unit that represents a user-driven semantic 2D or 3D segmentation of the "space & time". TensorLocation protocols can divide an entire environment into a grid of cells, and every cell can have a unique 2D or 3D Geohash address. Due to their hierarchical nature, cells inherently provide a division capability. In order to contribute to a 'Location as a System' vision, these cells must become intelligent.

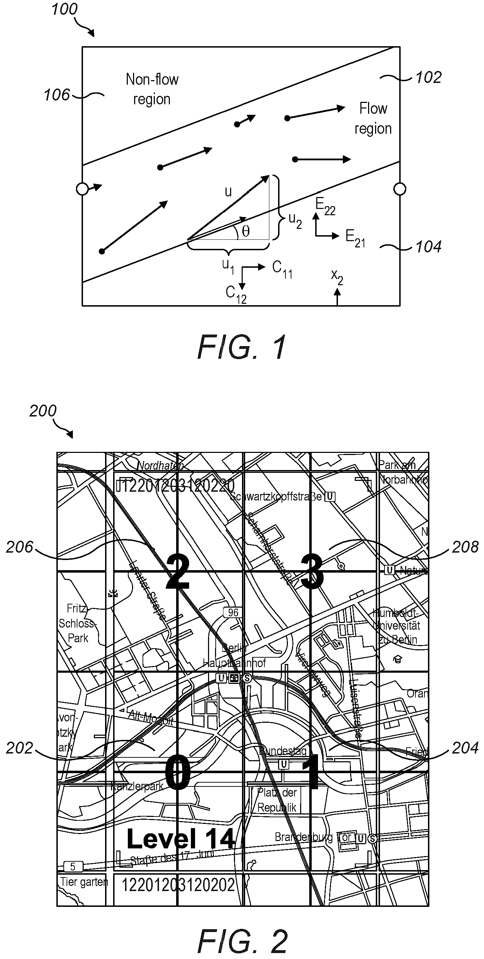

Figure 1 shows a schematic representation of a plan view 100 of a TensorCell. Part of the TensorCell shows a flow region 102 in which vehicular traffic is moving, while other parts 104, 106 are non-flow regions.

A TensorCell is a structure that can be built on top of a 2D or 3D Geohash index. TensorLocation is a multi-tenancy system allowing users to define the behavior of the TensorCells. A TensorCell can support attaching a user defined Protocol Buffer (e.g. Proto3) schema to describe data. Decentralized blockchain based storage can enable storing actual data assigned to a TensorCell near the location that the cell index represents, which can reduce the latency of data and network input/output. In order to allow purging of sensitive information, actual data need never be written into the blocks of the chain, only referenceable hashes. The temporal state can be represented by three timestamps. Two timestamps may represent the timeframe of validity, and a third could represent the time of occurrence (observation). This will allow for more flexibility and control when working with TensorCell data.

### Geohash

Geohash can be used as a basis for TensorLocation because of its conceptual and mathematical simplicity. Another benefit of the Geohash standard is that it is in the public domain. Geohash encodes a geographic location into a short string of letters and digits. It is a hierarchical spatial data structure which subdivides space into buckets of grid shape. Geohashes offer properties like arbitrary precision, similar prefixes for nearby positions, and the possibility of gradually removing characters from the end of the code to reduce its size (and gradually lose precision).

Geohashes are usually used to represent a location in a flat 2D world. However, this does not necessarily suit all use cases of TensorLocation and introduction of 3D Geohash may be needed in some situations (although a two-dimension TensorLocation system can also be used).

A theoretically correct approach to incorporate altitude / depth into the Geohash could be to modify the Geohash encoding and decoding algorithms to incorporate altitude directly into the Geohash string, so it becomes a 3D Geohash. But, given that TensorLocation must be able to operate the nearby locations by using different length Geohashes, simply adding altitude will not work. The 3D cells may advantageously have equal lengths in all dimensions X, Y, Z proportional to the Geohash length. So, the Z dimension value can be rounded to the same precision as X and Y dimension values. Z dimension value can be signed, so that altitude above and below sea levels could be represented. In other examples, altitude can be included into the TensorCell attributes, but without encoding it directly into the geohash. In such cases, the Geohash string would still be a 2D geohash, but with altitude encoded as a further attribute/metadata. Altitude can thus be described with a relative value (above/below sea level) or with a discrete value (cell stack level/building floor level, overpass level, etc.)

Geohash can be a fundamental element in TensorLocation. It can become an identifier of the objects in the TensorLocation allowing querying any event and object stored on and off chain.

Since Geohashes are intrinsically hierarchical, it also means that a transaction referencing a static object, and a transaction referencing moving object located within same location, automatically have a spatial relationship.

### Map Tiles

Figure 2 shows a map tiling scheme 200 which is based on quadtrees. A quadtree is a tree data structure in which each internal node has exactly four children. Quadtrees partition a two-dimensional space by recursively subdividing it into four tiles. The child tiles are numbered 0-3 in a fixed reverse "Z" pattern:
- Tile 0 is the southwest sub-tile 202,
- Tile 1 is the southeast sub-tile 204,
- Tile 2 is the northwest sub-tile 206,
- Tile 3 is the northeast sub-tile 208.

Each tile in the map has an identifier called a Tile ID. A Tile ID may be e.g. a 64-bit unsigned integer computed from the tile's quadkey. A quadkey is a string of numbers (0-3) which captures the hierarchy of parent-child tiles from level 1 to the target tile level.

For example, for a level 5 tile containing San Francisco, the quadkey would be 02123 when the parent tile is 0212 and the child tile containing San Francisco is number 3.

Map tiles and Tile IDs can be leveraged to bring map content to TensorLocation, for example to link road topology to a TensorCell. In order to do this, the TensorCell hash (its X and Y dimensions) can be converted into a Tile ID. By using the resulting Tile ID, TensorLocation can access associated map content.

Conversion is done by reverse calculating longitude and latitude from Geohash and then using a suitable formula to calculate the corresponding Tile ID. Such calculation can be expensive, therefore a static conversion tables can be calculated, so Geohash to Tile ID conversion will have constant complexity O(1).

Alternatively, 3D TensorLocation may rely on an extension of the map tiling scheme to 3D by adding the altitude dimension, which can be reported by GNSS devices as the elevation with respect to the WGS-84 ellipsoid. Similar methods work for converting a longitude-latitude-altitude tuple to a TensorCell identifier by using an octkey instead of a quadkey. Conversion between the 3D TensorCell IDs to Tile IDs is a simple operation of clipping and joining bits.

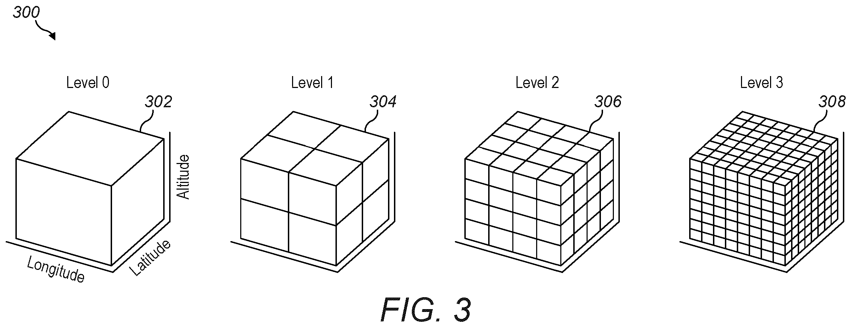

Figure 3 shows a representation of a 3D tiling scheme 300. The scheme 300 shows four different levels, in which: level 0 302 has a single 3D tile; level 1 304 has 8 3D tiles; level 2 306 has 64 3D tiles; and level 3 308 has 512 3D tiles. Thereby, as the levels increase in number a more precise positioning within the same volume can be provided.

RPC (Remote Procedure Calls) based services, such as gRPC based services, can be assigned to a TensorCell to make the cell intelligent. Users may be able to configure the deployment policy to have multiple instances running in different locations (e.g. MECs [Multi-access Edge Computing systems]) to reduce latency or have a location specific configuration.

TensorLocation can provide a tensor query language (e.g. graphQL based language) to enable complete and human readable description of the data to be queried from the TensorCells:
- TensorCells specific data
- Data about static and dynamic objects within the concrete cell or set of cells
- Location specific queries
- User specific queries

TensorLocation can also provide SQL (Structured Query Language) type functionality to enable efficient searching of cells. Here, cells may be formulated as algebraic objects, such as monoid objects of an appropriate algebra. Generally, monoidal categories can be used. When the data of a cell is formulated as a monoidal structure then the data can remain in the same form when manipulated by the operations of the monoidal category (as discussed below under the heading 'TensorLocation and Category Theory'). In this way, there can be no need to convert from the data domain to a geographical domain to perform geographical operations, and therefore no need to convert the results of the operation back to the data domain, thereby advantageously improving the efficiency of such operations.

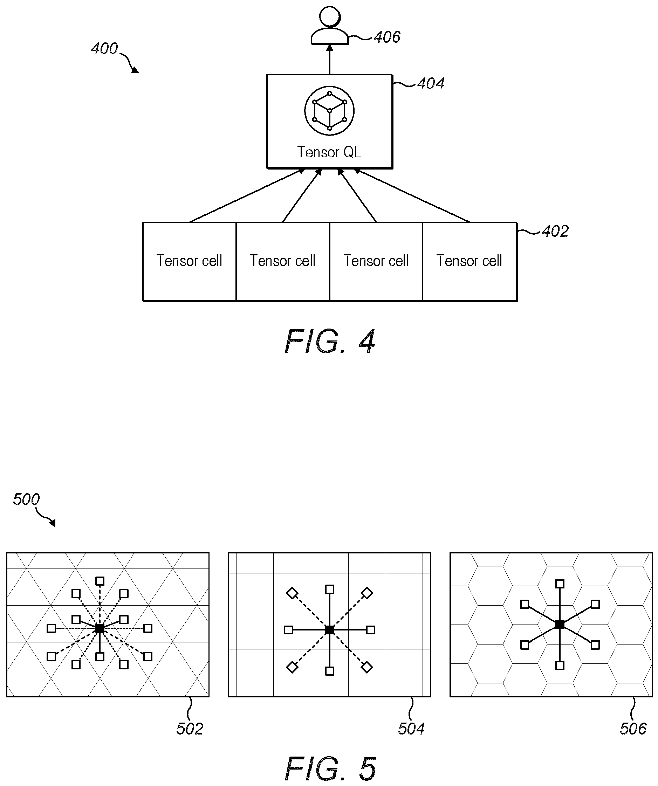

Figure 4 shows a schematic representation 400 of the functionality provided by tensor query language. A group of four TensorCells 402, when interrogated, provide information to a server 404 running the tensor query language. The server 404 can then readily provide the human readable description to a human user 406.

TensorLocation can utilize Multi-Access Edge Computing (MEC) technology having MEC centers to manage TensorCells that are under the MEC coverage zone. MEC devices (which are co-located with communication antennae) use computing clusters at the edge of a network and have a direct connection (with no IP routing hops) to exchange data between client and server, as opposed to cloud systems where information may travel large distances through multiple nodes for processing. In other words, data associated with each TensorCell may be stored and processed by an edge node located in, or close to, the geographical area associated with the TensorCell.

Providing TensorLocation using MEC devices (i.e. storing and processing data relating to a particular TensorCell at an MEC device located in, or close to, the geographic area associated with the TensorCell) can therefore bring many benefits in terms of decentralization and speed (because of low latency). It may also be possible to choose a geo indexing system based on a hexagonal tiling system to greatly reduce the complexity of the required algorithms.

Figure 5 shows alternative tiling schemes 500, including a triangular tiling system 502, a square tiling system 504 and a hexagonal tiling system 506. The lines between different cells in each grid of tiles represent the distances between midpoints of adjacent cells. The triangular tiling system 502 has three distances, the square tiling system 504 has two distances, and the hexagonal tiling system has a single distance. This property of the hexagonal tiling system makes it useful in situations such as routing in straight lines from one cell to the next.

Examples of 2D tiling schemes include HERE Map Tile API (which uses map tiles to form a complete map of the world using the Mercator Projection), OpenStreetMap tiles, and Uber H3 (which uses hexagonal, hierarchical indices). However, tiling can be performed with any method that decomposes two- or three-dimensional space and assigns a unique identifier to each division. 3D tiling schemes may use cubes, rhombic dodecahedral honeycombs, or any other shapes/lattice (regular or irregular).

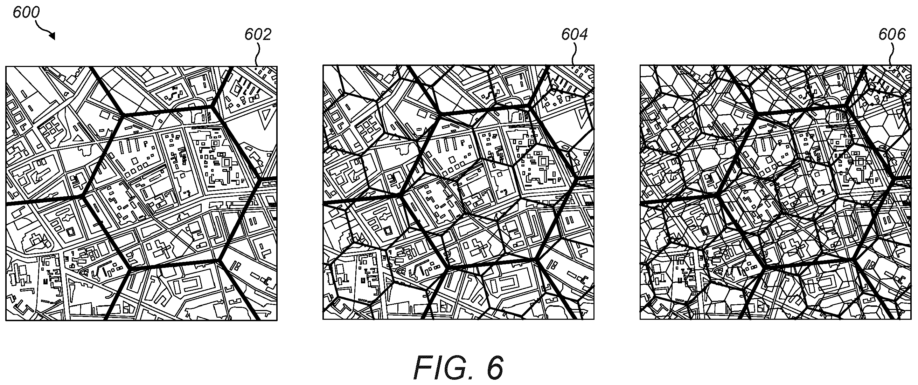

Figure 6 shows hierarchical hexagonal tiling schemes 600, including a first system 602 as a first, coarsest, hierarchical level, a second system 604 at a second, intermediate, hierarchical level, and a third system 606 at a third, finest, hierarchical level.

### TensorLocation implementation

In this section the major technology views and related components that are part of a TensorLocation implementation are described.

TensorLocation Fabric plays a central role in providing the major components for TensorLocation to work.

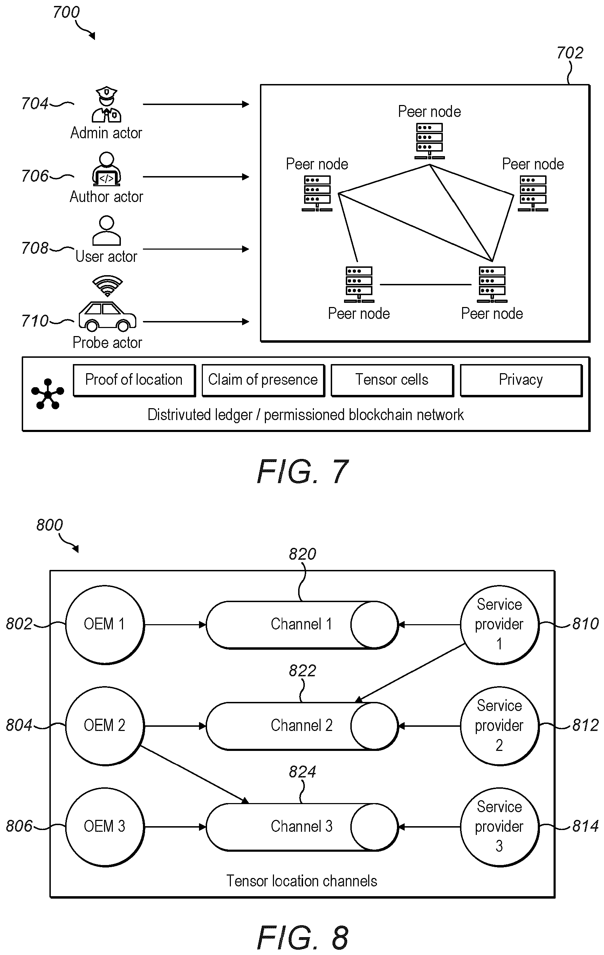

Figure 7 shows the TensorLocation Fabric 700, which is a distributed system in which:
a) A set of peer nodes 702 collaborates along a predefined fabric protocol
b) The fabric protocol ensures a constant synchronization and hand-shaking among federated collaborating nodes and provides a consensus mechanism to resolve 'quasi real time' conflicts across nodes (see below discussion for further details)
c) The peer node may have various types of specializations (a single compute node may play several functions at the same time). The key specializations for a peer node may be:
   a) Validators: the role of validators is to contribute across the p2p network and validate any 'transaction' happening on behalf of the actors
   b) Data custodian. the role of this class of nodes is to guarantee data consistency, powerful and secure storage mechanisms and to ensure the appropriate data proximity to satisfy stringent latency requirements
   c) Makers: nodes that participate in the various phases of the lifecycle of a TensorCell and ultimately the lifecycle to what can today qualify as a map. More specifically, there can be:
      i. Detectors: nodes that detect changes in the physical world, generally subscribed and listening to 'probe actors' e.g. devices providing probe data;
      ii. Aggregators: nodes that have the task to aggregate various observations into a set of features and situational events connected to the TensorCells;
      iii. Aligners: nodes that have the task to align and reference all the various TensorCells producing an always 'eventually consistent' set of manifolds.
      iv. Publishers: nodes that have the task to publish the aggregate according to various formats and according to various 'user defined' publishing rules and schedules
   d) Three major actors interact with the fabric:
      1. Admin actor 704: typically a human actor who can set up permissions, network access and boundaries, administrative privileges, node behavior, etc.
      2. Author actor 706: typically a human who can access the TensorLocation fabric to access information, monitor, define logics, define 'user specified' entities, etc.
      3. Probe actor 708: typically a device or a machine that is subscribed to the fabric and constantly alert for any changes. Essentially, probe actors are 'authorized' entities that tell the TensorCell about changes for features (static, dynamic, user defined, etc.) that are linked to the TensorCell. Typical probe actors can include: IOT devices, smartphones, sensors, satellites, cameras, sensor equipped vehicles (e.g. newer personal/fleet vehicles, semiautonomous vehicles, autonomous vehicles, HERE True car), aerial/terrestrial drones etc.. It is important to appreciate that the input coming from probe actors can be validated through the TensorLocation consensus mechanism (see below)
      4. User actor 710: typically a human or a machine interacting with the TensorLocation and depending on their credential will get their own context and set of capabilities.

### Federated Communication Protocol

The TensorLocation communication protocol may provide many capabilities including bidirectional streaming, flow control, and multiplexing requests over a single connection. Importantly, it is physical and transport layer agnostic, thereby enabling pluggability and scalability of the network.

TensorLocation can utilize enterprise grade blockchain implementations. Since target users for TensorLocation include big enterprises (such as vehicle manufacturers) that operate with private data, a permissioned blockchain is highly suitable for these applications.

Blockchain can bring the following benefits to TensorLocation and its users:
1. Decentralized: Instead of being stored in any one single point, the blockchain system is entirely decentralized.
2. Security / immutability: Once every block is sealed cryptographically, it is impossible to copy, delete, or edit, ensuring the immutability. On top of this, every transaction needs the digital signature through both private and public keys that utilize different cryptographic schemes.
3. Trust: Organizations sharing the same goal but do not necessarily trust each other can safely collaborate.
4. Transparency: It is possible for users to verify and track transactions. An individual with access can view the entire record of transactions.

### TensorLocation Channels

Figure 8 shows a representation of a TensorLocation Channel system 800. As TensorLocation is a distributed system it may involve multiple organizations 802, 804, 806 running their applications on the same infrastructure. There are cases when organizations need to keep their logic and data private revealing these only to the trusted subset of counterparties 810, 812, 814. For that matter, TensorLocation can introduce the notion of channels 820, 822, 824 that allow users of TensorLocation to privately cooperate. A TensorLocation channel is a private "subnet" of communications between two or more specific network members for the purpose of conducting private and confidential transactions. Transactions and ledgers are segregated, running on top of the single TensorCell grid. This allows associating multiple TensorLocation Crypto Coordinates (cryptographically encoded addresses as described in more detail below) for the events and object within a single or set of TensorCells without revealing sensitive information.

### Decentralized Location Verification solution

A decentralized location verification system can be designed as an open standard that allows qualifying participants to become their own service providers. It is possible to base the TensorLocation protocol on a Blockchain powered framework. The TensorLocation protocol can be physical and transport layer agnostic (GPS, 5G, Device-Free, LPWAN, etc.) to enable pluggability and scalability of the fabric. Like Bitcoin, Ethereum and other blockchains systems that involve "miners" to run and operate network, crypto-economic incentives may be possible to grow distributed location verification systems and markets.

### Blockchain Consensus Algorithms: a short background

Byzantine Consensus protocols are often structured in a sequence of rounds or epochs where participants propose and agree upon values in a sequence of epochs. Participants receive a sequence of state-changing requests from clients, participants must propagate the effect of requests to each other, and the entire set of the right participants must come to agreement on the values and provide feedback back to the clients.

At high level, any consensus protocol can exhibit the following four properties:
- Validator set
- Validator weight
- Validator criteria
- Validation verifiability

Today there are two main consensus algorithms frequently used: Proof of Work and Proof of Stake. Proof of Work has an unknown number of validators, but validator weight is known (e.g. hash-power). Validation criteria is simple to check if the calculated block-hash meets the required difficulty. The verifiability requirement is to have a chain synced, since without it there can be no guarantee that the new block is valid in the chain. Proof of Stake has a known validator set; the 'validator staker' must be known by their public key and deposit amount before they can participate in the protocol, and the protocol itself governs validator weight through the maximum total stake metric. The validator criteria are to have enough stake to participate and perform the staking process by signing, and being accepted into the validator set. The validation verifiability, like in Proof of Work, is mainly having the chain synced, as otherwise there is no way to know how much a validator has staked or whether they are even in the set of accepted validators.

In the context of TensorLocation the location of the cells and true physical location of the objects within these cells plays a key role. Proof of Work or Proof of Stake require only a communication channel to conduct validation, physical location is irrelevant. Therefore, there is the need to introduce a new "Proof of Location" consensus mechanism.

### TensorLocation Smart contracts

A smart contract is a piece of code that can be written in one of the popular languages such as Go or Node.JS and implements required logic. It can be installed and instantiated on the TensorLocation network within a channel and allows interaction with that channel shared ledger.

A purpose of the TensorLocation Smart contracts is to provide a framework that allows creating and managing TensorLocation Crypto Coordinates. TensorLocation Smart contracts are linked to the TensorCells within the channel it runs in. The benefit of the TensorLocation Smart contracts includes the ability to deploy as a standalone service, so it can be highly distributed and highly resilient.

TensorLocation Smart contracts behave as a programmable payload of the TensorCells and can represent any event associated with the cell through TensorLocation Crypto Coordinates.

### Location verification protocol (Proof of Location)

There is a long history of positioning with cellular mobile radio technologies. Different technologies (from 1G to 5G) can employ different techniques (e.g., Angle-of-Arrival, Time-of-Arrival, Time-Difference-of-Arrival etc.) and achieve different KPIs such as latency, accuracy and cost.

5G presents a unique opportunity to achieve low cost, highly accurate localization due to some aspects that it introduces such as massive MIMO, network densification, beamforming, device-to-device networking. Positioning is built into 5G standardization process unlike previous cases, where it was introduced as an afterthought. Industry is actively working on 5G positioning, engages in 3GPP standardization efforts and reports latest results.

Given the capability that a mobile network operator (MNO) can position a subscribed user equipment with certain quality metrics, privacy concerns have become even more relevant. Any business solution that involves data sharing needs to maintain privacy and security. In order to solve the proof-of-location problem, it is possible to leverage the positioning capabilities of MNOs.

At a high level, a proposed solution involves three stakeholders:
- Probe Actor: the entity whose location is to be verified,
- MEC Validator 1: the entity that receives the location of the probe actor, as reported by the actor itself, and wants to prove its location,
- MEC Validator 2: the entity that can position the probe actor passively (e.g., an MNO that the probe actor is subscribed to).

These solutions address two types of problems:
A. Secure Multi Party Location Verification: This verifies that two parties agree on the location of a probe actor.
B. Secure Multi Party Location Fusion: This is an extension to the above technique which computes a fused location considering knowledge from both parties.

Proof of Location provides the same four consensus properties as blockchain, but because the problem is more heavily constrained by physics, the implementation of those properties is different. Every TensorCell is related to a set of authorized and trusted validators that cover a physical spatial area (e.g., mobile network operator, wireless network provider, etc.). For a given area the validator set is a list of authorities that share the same geospatial zone. Numbers of such validators may be different for the various areas (e.g., middle of ocean vs. city). Validator weight depends on the scale, coverage, number of nodes (such as mobile network operator vs. local internet provider). Since time is also a very critical dimension in TensorLocation, validator criteria are defined by having a signature by the validator with a biggest weight in the area of interest. Validation verifiability is to ensure that an object is physically present in the area covered by the signing validator(s). For example, a mobile device physically connected to a set of base stations covering that specific area where device is residing.

An example of a validator is a 5G Base Station Controller (BSC) that controls multiple antennas within an area of hundreds of square meters. This controller is capable of precisely positioning 5G enabled devices (vehicle, cell phone, smart watch, etc.) using 5G radio signal characteristics and to "sign-off" this. Having multiple independent BSC/s validating and signing the position of the same device gives strong guarantees that this device is indeed in the reported position.

Proof of Location requires Byzantine Fault Tolerance, which means it can withstand up to a third of system-wide faulty or malicious nodes and still follow the protocol correctly. Providing consensus on whether an event or agent is verifiable at certain point in space and time by issuing cryptographically signed and authenticated certificates that can be called "claim of presence". Claim of presence is 'first class citizen' smart contract that contains the following fields:
- Reference to the TensorCell;
- Reference/Hash to the block with valid claim of presence;
- Reference to the Authority that issued claim of presence.

More generally, the computing device that executes the executable kernel can generate a signed certificate that contains the time-valid location-based information for a particular cell, where the time-valid location-based information relates to any information relevant to the cell, including a claim of presence. For the signed certificate to be authenticated (or equivalently 'validated') then execution of the executable kernel must be performed by another, different computing device, that can independently verify the validity of the signed certificate by determining validation information and then checking that the validation information matches the signed certificate to within at least a predetermined threshold. These two computing devices may be referred to as a first device and a second device to avoid confusion, without 'first' and 'second' implying any particular characteristics of either device. One or both of these computing devices may be an edge computing device.

Claim of presence acts as an evidence that an entity is in certain location. This data is used by any computational engine capable of verifying that this claim of presence is authentic and well-formed. Before calling any TensorCell programmable payload, a verified claim of presence can be presented. Examples relevant to a claim of presence require that the semantic location data includes presence data that represents an indication that a client device is present within the location of the cell. Then the signed certificate is also representative of the indication of presence of the client device. Validation information generated by a second computing device, such as a second MEC, includes a second indication of the presence of the same client device within the location. The validation information can be said to match the signed certificate when the first and second indications of presence overlap to an extent that they satisfy an overlap criterion. Such an overlap criterion may be probability that client device is present at the location of at least a specific numerical value, such as 95%, or any other appropriate percentage. When this overlap criterion is satisfied then signed certificate can be validated to create a validate/authenticated signed certificate.

When the authenticated signed certificate indicates that the relevant client device is present in the location then that client device may be granted access to information that is relevant to the cell corresponding to the location. This access may be read only access or may extend to both read and write access. In some examples the access granted may enable the client device to communicate with one or more other client devices that are also certified to be present within the same location.

The blockchain based 'proof of location' consensus protocol with its related 'claim of presence' smart contract can be of key importance in the TensorLocation architecture:
- It allows an easy but strongly reliable auditable process to plug various data sources (probe actors) which contribute to the TensorCell content update;
- It guarantees a highest level of built-in privacy as well as system reliability in case of failure of some computing nodes;
- It opens a door for 'micro-incentivization' across multiple users that are part of TensorLocation ecosystem.

More generally, a blockchain running on an edge computing network can include a smart contract that records any information relevant to any TensorCell present in the TensorLocation, that is, the smart contract may contain the time-valid location-based information derived from the semantic location data relevant to any TensorCell. A second computing device running on the edge computing network can then validate/authenticate the smart contract to write a validated smart contract into the blockchain. It will be appreciated that while the edge computing network is referred to as such above, this network may also contain other computing devices that may not be edge computing devices alongside those computing devices that are edge computing devices, such as MECs.

The validated smart contract may provide for many different functionalities such as, but not limited to, providing the time-valid location-based information to any particular TensorCell or to any object or client device present in any particular TensorCell.

### Secure Multi Party Location Verification

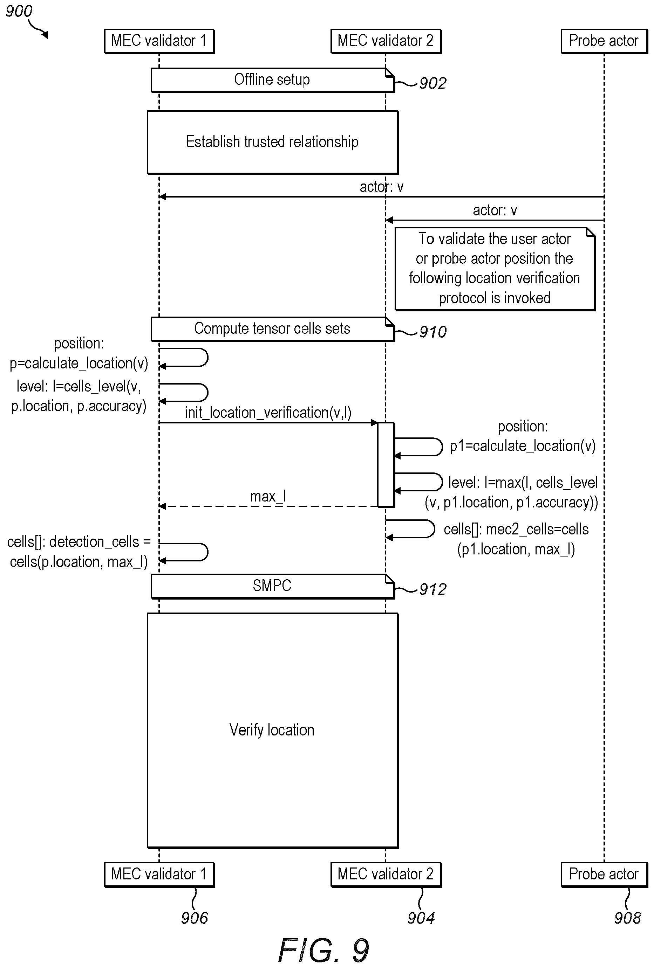

Figure 9 shows a location verification process 900, which is composed of three stages:
1. Offline setup 902: in this phase MEC Validator 2 904 establishes a trusted relationship with MEC Validator 1 906 by exchanging certificates, recording a transaction on the blockchain, by defining the relationship as trusted on the Smart Contract or the like. Next stages happen repeatedly whenever there is a need to verify the location of a probe actor 908.
2. Computing TensorCell sets 910: both validators compute the TensorCell sets that they think the probe actor is in by using position and positioning accuracy and agreeing on the level of the cells.
3. Secure Multi Party Computation 912: MEC Validator 1 906 and MEC Validator 2 904 verify the location based upon the signal received via MEC Validator 1 906 and the position estimate performed by the MEC Validator 2 904.

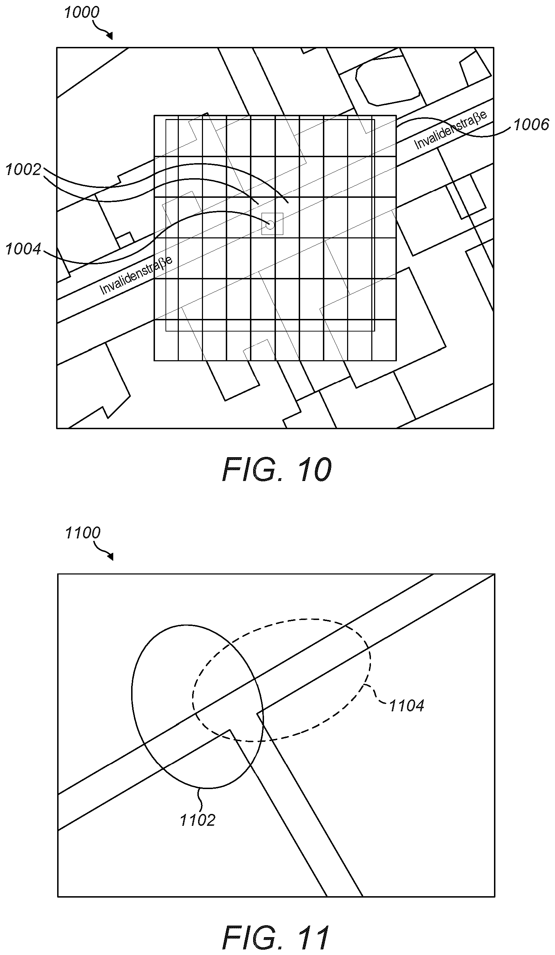

Figure 10 shows TensorCell sets 1000 (in 2D) from the two Validators of figure 9. The two cells 1002 derived from the probe actor's location 1004 intersects fully with the cell set computed by Validator 2 1006.

### Location Data Fusion

Figure 11 shows a map 1100 with a pair of ellipses representing a first location 1102 of a probe actor known by the MEC Validator 1 906 (e.g. reported by the probe actor device) and a second location 1104 of the probe actor known by MEC Validator 2 904 (e.g. determined using network-based positioning from cell antennae). The size and shape of the ellipses represents the uncertainty associated with the locations. Knowing the accuracies of each positioning source, a fused location can be derived by combining the location information. This fused location may provide an improved estimate of the actual location of the probe actor.

### Data model and Data representation

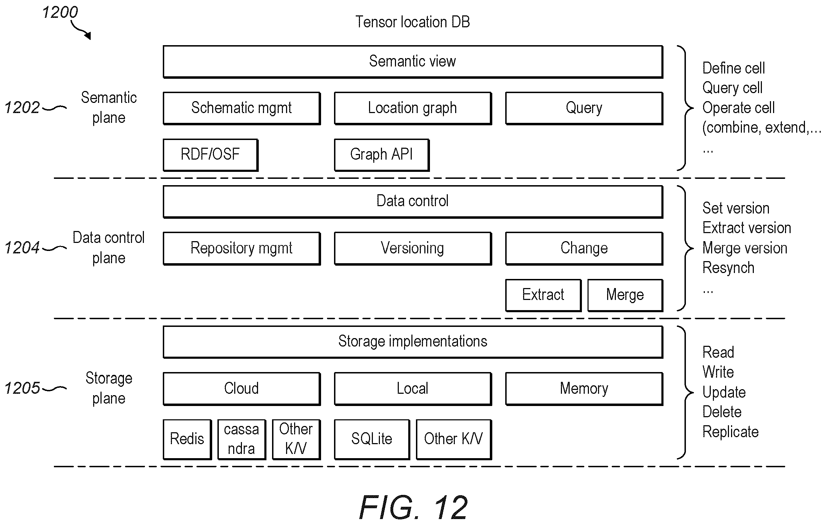

Figure 12 show a schematic diagram of the structure of a TensorLocation Database 1200. The success of TensorLocation is connected to the flexibility and openness of its underlying data model and data representation mechanisms. TensorLocation can be based on a highly distributed database logically composed of three decoupled layers:
1. Storage plane 1202
   ∘ This "plane" would be mostly devoted to the physical storage of the data, taking into account appropriate mechanisms for replication, access to multiple storage devices (e.g., cloud, local, in memory, etc.). It is up to this plane to adopt the best replication and streaming techniques (e.g. GPU acceleration) to ensure the desired response times. It will also expose a consistent API layer into a Data Control Plane.
2. Data Control plane 1204
   ∘ The Data Control Plane primary mission is to maintain an appropriate level of consistency across the "map" represented by set of TensorCells. More specifically the Data Control Plane will be responsible for version management and data change management. In terms of data change management this plane can enable an easy integration across multiple TensorLocation CI/CD pipelines where a subset of features can be extracted, manipulated locally and then merged back into the overall map. (As an analogy, it is possible to consider the current GitHub versioning and code merge capabilities expanded into a location content set of domains.)
3. Semantic plane 1206
   ∘ The semantic plane can manage the lifecycle of semantic relationships across various elements (e.g. Location Graph) and it will allow accessibility and queries across semantic entities.

### TensorLocation and Category Theory (algebra for TensorLocation)

It can be very advantageous to base the entire TensorLocation fabric on top of a very well-established mathematical foundation that would not only increase the robustness of the entire approach, but would also facilitate the development of powerful, extensible and generalizable TensorLocation operators.

In particular, Category Theory can used as underlying "modeling language" for TensorLocation. Category Theory is an abstract and powerful mathematical framework (a superset across set theory, group theory, geometry, topology, and other diverse areas of mathematics) that makes it possible to represent relationships between mathematical objects.

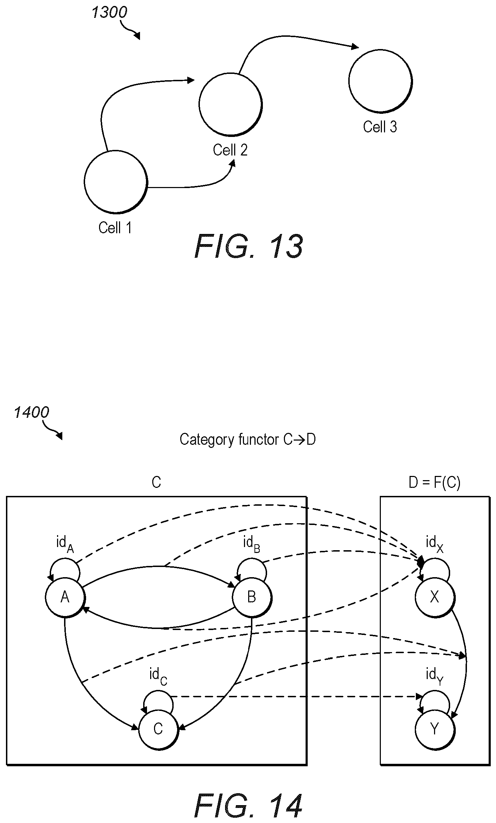

Figure 13 shows a Category 1300 which is a collection of objects related by a set of arrows (morphisms).

A category also needs to have a 'composition' operator which is associative and it must also have the 'identity' element. Objects and arrows can represent virtually any sort of relationship between elements. Another important notion is related to transformation across categories.

Figure 14 shows a schematic diagram 1400 of a Functor that comprises transformations across categories (so they map objects and arrows).

It is possible to consider the collection of TensorCells represented as a monoidal symmetric category where:
- Objects are represented by TensorCells
- Arrows represent the 'relationships' across TensorCells (e.g. 'contained in', 'belong to', 'close-by', etc.)
- The notion of 'identity' will be represented by the empty TensorCell
- In addition, a notion of 'product' between two TensorCell will be provided by the union of the TensorCells themselves

For example, there may a first cell a second cell and a third cell. The first cell may be related to the second cell by a first mapping, which may be a first morphism. The second cell may be related to the third cell by a second mapping, which may be a second morphism. The first cell may be related to the third cell by a third mapping which may be a third morphism. Where the third mapping is a product of the first mapping with the second mapping then the third cell will be the union of the first cell with the second cell. Thus, the geographic range of the third cell with be the sum of the geographic ranges of the first and second cell.

These mathematical relationships between different respective cells can provide a convenient framework for determining what access should be granted to client devices that are authenticated as being present in a particular cell. For example, when a first client device is authenticated as being present in the first cell then the first mapping may be invoked to determined that the first client device should be given access to location data or a second device present in the second cell. Alternatively, the third mapping may be invoked to determine that the first client device should be granted access to location information about either of the first or second cells that make up the third cell and/or granted access to a third client device that is located in either of the first or second cells.

In some examples the first and second cells may be coterminous such that the third cell forms a simply connected volume. Alternatively, the first and third cells may be spaced apart in such a way that they are disconnected from each other. That is, they have a space or volume interposed everywhere between them and are thus non-overlapping and non-coterminous. In such a case, providing a client device with access to information or a second client device relating to the second cell may provide a form of early warning signal that provides the first client device with information while the first device is still a safe distance away from the second cell.

In further examples there may exist an intermediate cell that is positioned between the first cell and the second cell. If a client device moves in the first cell then the client device may be given a first piece of information, such as an early warning about a hazard in the second cell, and if the client device nonetheless moves into the intermediate cell then second information may be provided to the client device that provides different functionality than the first piece of information. For example, whereas the first piece of information may be simply a warning, such as for the driver of a vehicle to slow down, the second information may instruct the vehicle (which may have an autonomous or semi-autonomous functionality) to slow down, irrespective of the driver's behavior, to avoid the hazard in the second cell.

More generally, as a client device moves along a path that navigates through a series of different cells, the client device may receive a cascade of different pieces of information, enabling a corresponding cascade of different functionalities.

Where a series of different cells are present, a first cell and a second cell can be used to form a third cell. In algebraic terms, the third cell may be said to be formed from and operation performed on the first and second cells. For example, the third cell may be a union of the first cell and the second cell, such that the third cell includes all of the content of the first and second cells.

Such operations performed on the first and second cells can correspond to any of the standard binary operations of set theory, such as the union of sets described above. It will be appreciated that in this context the union operation may be expanded to include at least the strict or proper union of the first and second cells (where the strict/proper union includes only the content of the first and second cells) and may comprise further content not included in either the first cell or the second cell.

Other set theoretic operations that may advantageously be used include the intersection, relative complement and symmetric difference of the first cell and second cell. Again, in these examples, these set theoretic concepts may be used in their strict/proper set theoretic sense to include only content from the first and second cells, or may include further content not present in either of the first or second cells, as discussed further below.

Further useful operations on the first and second cells can include a distance between the first cell and the second cell, where the distance can be between any geographic point in the first cell and any geographic point in the second cell. The distance can be between the geometric center of the first and second cells, respectively, or the distance between a pair of points in the respective cells that are closest to one another, or farthest away from one another, for example. Similarly, the operation may be a selection of any two points from within the first and second cells respectively, such as the points closest to one another or farthest away from one another or the points at the respective geometric centers of the first and second cells.

The selection of the pair of points (or the distance between them) can be based on any other selection method, such as the identification of points based on the location of real-world objects contained within the two cells.

Since cells have both a spatial and a temporal extent, the operation may relate to either purely spatial aspects of the cells (such as the union of the geographic extent of the cells) or to purely temporal aspects of the cells (such as the union of the temporal extent of the cells). Alternatively, both spatial and temporal aspects may be used simultaneously. For example, an operation may define a third cell that includes both the geographical extents (spatial union) of the two cells, but only during a period of time when the two cells share a temporal overlap (temporal intersection). In this way, an operation may be defined from different set theoretic operations for the spatial and temporal extents, respectively, of the two cells, in any combination.

In this way, the TensorLocation concept can enable highly flexible methods for combining components parts from two respective cells to form a third cell that can have useful properties in its own right.

Since the operation can be said to 'comprise' elements from the first cell and the second cell, it can also include other content. For example the operation may include content from other cells or from other objects, such as map objects from a map database. In this way the operation may include representations of such real-world objects as buildings, roads, infrastructure elements or any other mapped object that is relevant to the first and/or second cells but not included within the first or second cell. In some examples a cell need not necessarily include a map object, but rather the cell may be modelled using the operators to coincide with the object location and object geometry of the map object. This allows the object to be referenced in the cell, thus avoiding the need to include a representation of it directly.

This possibility to represent TensorLocation in terms of categorical properties, when fully implemented across the fabric, will introduce great flexibility and generality, avoiding much 'ad hoc' engineering and workarounds present in existing location systems. For example:
- A common and consistent set of 'algebraic operator' can work across all TensorLocation elements:
   ∘ Compare
   ∘ Add / Sum
   ∘ Subtraction (delta)
   ∘ Compose
   ∘ etc.
- An effective and generic 'naming addressing schema' across TensorLocation which can allow every user to apply its own naming convention and always refer to the right set of entities (analogous to DNS applied to TensorLocation)
- A consistent class of transformations (e.g. functors F) across TensorCells categories that would 'abstract' (aka 'categorize') a large set of typical patterns of use case:
   ∘ Segmentation: for example to restrict the model to a particular domain (e.g. a road model). TensorLocation can provide 'out of the box' a set of Functors (Transformers) that can map the TensorCell Category into corresponding well known domains such as Roads, Lanes, etc.
   ∘ Classification: build a set of Cells that have same set of characteristics/qualifiers
   ∘ Enrichments: possibly through "neural network" transformation augmentation TensorCell category with additional 'location intelligence' insight (e.g. mobility index, confidence quality scores,)
   ∘ etc.

### Deployment model

The distributed nature of TensorLocation architecture can allow a deployment model that scales well horizontally and can also allow flexible database sharing.

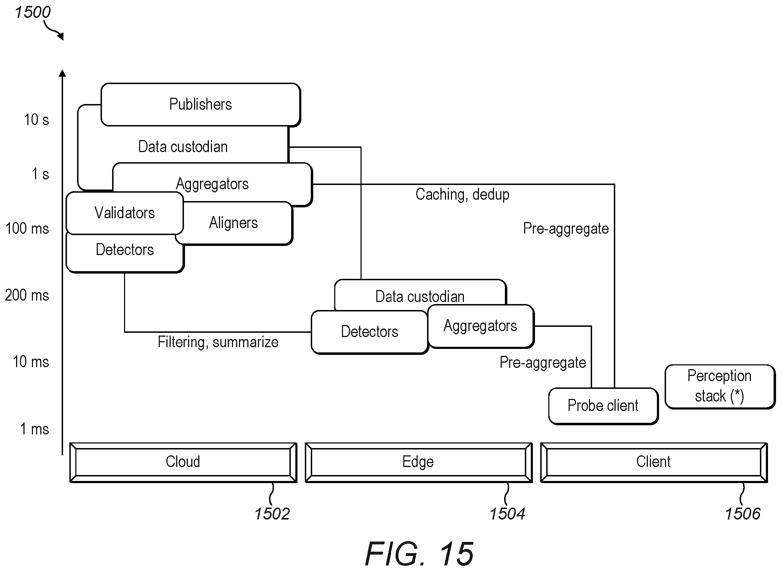

Figure 15 show a diagram of a deployment model 1500, in which there are three main tiers in TensorLocation computing model:
1. Cloud 1502: some TensorLocation components can reside in the Cloud (in a multi-cloud approach possibly leveraging application containers, e.g. Kubernetes clusters)
2. Edge 1504: some TensorLocation componentry will stay at the edge (MEC technology)
3. Client 1506: TensorLocation lightweight client agent that will run at a device/IOT endpoint level.

Ultimately, the TensorLocation deployment model can consist in deployment patterns that prescribe how to deploy the key computing units described above:
- Validators
- Data custodians
- Makers
across the three major tiers to find the best optimization across latency and computing cost. Optionally it is possible to tune the TensorLocation deployment model in order to satisfy a specific set of user requirements (for example, to prioritize a particular geographic region)

It some examples it can be assumed that:
- Validators can stay in the Cloud with the requirement to be sufficiently spread to avoid excessive latency times. They can stay in the Cloud since they need to see the entire chain.
- Data Custodian would be across Cloud and Edge; more specifically it is possible to consider the Data Custodian implementing typical storage hierarchy policies where the TensorLocation data, which is supposed to have higher change rate, will be cached at the Edge while more 'static' TensorCell would be stored in the Cloud. It is also advantageous to build a fault tolerant redundant storage infrastructure.
- Makers can be across Cloud and Edge. It can also be beneficial to consider a close form of "collaboration" across the various makers (at Cloud and Edge) in order to always have the TensorCell content fresh and reliable.
- Finally it is important to note that in TensorLocation, units such as the 'probe actor agent' can prioritize the creation and transfer of 'neural model quantum' (in a federated learning mode) rather than bulk of raw data.

### Permission model

The TensorLocation system can include a sophisticated permission model configured to control which users can undertake which types of action and under what circumstances.

TensorLocation smart contracts can include a scope that defines an executability condition that determines under what conditions the executable code instructions can be executed. For example, the executability condition can determine which users can execute a smart contract. In some situations, only one user may be allowed to execute a particular smart contract, such as a contract that updates the opening hours of a service provider, where only the owner of the service provider may have the required permission. In this example the user can be allowed to execute a write operation to update the opening hours, in addition to read operations. Other users, by contrast, may be allowed to execute only a read operation to discover the opening hours.

More generally, users may be assigned or associated with particular roles, and only users with a particular role may be allowed execute a given smart contract. For example, one role could be a type of employee of a service provider and any user having that role could have read/write permission in relation to updating the opening hours of the service provider. Conversely, other types of employee may be assigned other roles that have only read permission.

In some examples, the executability condition may determine what types of procedure the smart contract may execute, either independently of restrictions relating to roles/users or in addition to restrictions based on particular roles and/or users. The procedures concerned may relate to any functionality that a smart contract can execute, including the (set-theoretic) operations, discussed above, or read operations and write operations. It will be appreciated that read/write operations are not to be confused with the set-theoretic operations. Other types of procedure may include different types of search or query operation, as discussed below.

In some examples, particular users or roles may be granted the ability to execute a smart contract on a spatially or temporally limited basis. Generally, the executability condition may allow execution of the smart contract on overlapping cells, however, to prevent inconsistencies where overlaps exist executability conditions may prevent execution on overlapping cells and only enable execution on non-overlapping cells.

A particularly useful executability condition restricts the ability of a user to execute a smart contract on a specific cell to cases where the user is present in the cell at the time of execution. For example, to provide for accuracy when executing a smart contract to update present weather conditions in a cell, only as user in the cell may be allowed to make an update.

In other examples, the executability condition may restrict a smart contract to executing a read operation or to executing a write operation.

Executability conditions can also determine that a smart contract may only execute a particular procedure on a particular cell or cells. For example, a smart contract configured to update traffic condition information may only be executed by a traffic camera system for cells containing roads that are visible to that traffic camera, to ensure accuracy of the update information.

The scope of a smart contract may include any combination of executability conditions, to enable the executability of the smart contract to be enabled or restricted in any way.

### Detection model

One important task in TensorLocation is to detect with precision and low latency the position of an object (static or dynamic) that is spanning across the TensorLocation Grid system. In this section this subject is considered in detail.

Regardless of the method, the model that can be used to estimate and validate the position of an object needs to fulfil certain characteristics. These characteristics are defined based on an absolute or a relative position estimation, which can be further specialized into a horizontal position and into a vertical position. In some applications, the availability of position estimates is an additional attribute that describes the percentage of time when a positioning system is able to provide the required position data within the performance targets or requirements.
1. Position accuracy describes the closeness of the estimated position of a device (either of an absolute position or of a relative position) to its true position.
2. Speed accuracy describes the closeness of the estimated magnitude of the device's velocity to the true magnitude.
3. Bearing accuracy describes the closeness of the measured bearing of the device to its true bearing. For a moving device, the bearing is a measure of the velocity's direction and this KPI can be combined with speed accuracy into the velocity's accuracy.
4. Latency describes time elapsed between the event that triggers the determination of the position-related data and their availability at the positioning system interface.
5. Time to first fix (TFF) describes the time elapsed between the event triggering for the first time the determination of the position-related data and their availability at the positioning system interface.
6. Update rate is the rate at which the position-related data is generated by the localization system. It is the inverse of the time elapsed between two successive position-related data.
7. System scalability defines the number of devices for which the positioning system can determine the position-related data in a given time unit, and/or for a specific update rate.
8. Security and Privacy are also relevant aspects.

Today there are many technologies that fulfil these characteristics: GNSS, 3G, LTE, 5G, LPWAN, ALPS, Bluetooth, IP, WAN, LAN, etc. One of the key design principles for the TensorLocation is to be applicable to any domain and therefore it is important that Proof of Location can leverage as many technologies available as possible. This can be achieved through the mechanism of open participation that enables vendors to join the ecosystem by bringing their technology and infrastructure to become authorities for Proof of Location. The main requirements are coverage and ability to issue and validate "claim of presence". Research into new technologies will continue, and the TensorLocation system is capable of adding new types of authorities with new technologies to support evolution of the Proof of Location.

### Global Navigation Satellite System based localization

GNSS positioning (such as GPS, GALILEO, GLONASS and BEIDOU) is very common and widely used. Ordinarily, GNSS positioning is incredibly reliable; however, problems and attack vectors with this system have become increasingly evident. Civil GPS is unencrypted, it has no proof-of-origin or authentication features, and despite dire warnings in the mainstream since at least 2012, the system remains extremely susceptible to fraud, spoofing, jamming, and cyberattack.

The limitations of GNSS positioning require at least four satellites signals to be overhead, which makes indoor localization nearly impossible. Urban density and skyscrapers also cause difficulties in receiving four messages and the issue of multipath signals occurs within the vicinity of high-rise buildings also present serious limitations. Further, for a GNSS device, it can take multiple minutes to acquire an accurate coordinate. When it comes to power consumption, GNSS is a drain on battery and is not feasible for low powered IoT devices. To summarize the issues with the dependencies on GNSS in TensorLocation:
- Single point of failure
- Poor signal path-through for indoor or underground
- Urban density increases signal multipath
- Unsecure: spoofing
- High power consumption (not well suited for the long maintenance cycle devices).

Some of these problems can be overcome by using a combination of GNSS and Radio Signal based systems, such as WiFi, Bluetooth, Bluetooth Low Energy, 2/3/4/5G cell signals, ultrawideband (UWB) signals, etc.

However, some problems (such as spoofing) remain even when combining GNSS with Radio Signal based technologies. Therefore, TensorLocation may utilize other positioning systems such as 5G based Localization systems, the NASA Agile Local Positioning System, and Low Power Wide Area Networks.

### 5G based Localization systems

The 5G wireless ecosystem will be useful for a myriad of new applications based on accurate location awareness. Such wireless ecosystems will be enabled by advanced 5G wireless technologies integrated with existing technologies for the Internet-of-Things and the global navigation satellite system.

5G is a high-frequency, low-range signal, so base stations will be clustered densely. Instead of cell towers spread widely, tiny 5G stations will blanket areas in a sort of edge-computing mesh network that distributes bandwidth and processing optimally to each user. 5G base stations can have compute data centers at their base. The distribution of that compute is going to be intelligently performed by software that allows the orchestration of where it should come from. This allows for those same stations to more accurately triangulate spatial positioning, compared with cell towers today and even GPS. GPS provides meter-level accuracy, while 5G will have sub-meter accuracy in many cases. That unlocks powerful localization capabilities useful for the Proof of Location so we can consider 5G as a useful enabler for TensorLocation.

### NASA Agile Local Positioning System

ALPS is a distributed system that consists of the set of beacons that communicate via set of links. Nodes can be placed strategically to form a distributed system within which target can navigate and perform tasks. The knowledge about network setup and physical location of nodes is not needed. ALPS relies on the fault tolerant time synchronization between nodes and this enables calculation of the relative positions of the objects. This technology can bring TensorLocation functionality, such as Proof of Location, to the places where GPS or any other technology is not available. For example, space or deep underground mines.

### Low Power Wide Area Networks

LPWAN technologies offer unique sets of features including wide-area connectivity for low power and low data rate devices, not provided by legacy wireless technologies. LPWAN networks are unique because they make different tradeoffs than the traditional technologies prevalent in IoT landscape such as short- range wireless networks. IoT and M2M devices connected by LPWA technologies can be turned on anywhere and anytime to sense and interact with their environment instantly. LPWA technologies achieve long range and low power operation at the expense of low data rate and higher latency. LPWAN have the same radio characteristics and can be used in the same way as e.g. 5G for localization purposes. However, due to very low power consumption this technology can provide TensorLocation functionality such as Proof of Location especially in IoT domain where longevity of battery is key.

### TensorLocation Crypto Coordinates

Throughout history, there have been many ways of encoding physical location into addresses, from longitude and latitude all the way to the more recent Geohash. The fact remains that most of the Earth's surface lacks addresses. According to the United Nations, 70% of the world is unaddressed, including more than half of the world's sprawling urban developments. Alternative addressing systems have attempted to increase human memorability, verifiability and machine readability. As these systems are typically either proprietary and/or lacking economic incentives, attempts to create a standard around them have been crippled. TensorLocation can provide a location standard for blockchain applications that is free, open source and interoperable so that it can securely connect offline spaces to online assets.

TensorLocation Crypto Coordinates are cryptographically encoded addresses with corresponding address located in physical space that is verifiable using smart contracts. This allows for physical locations in the environment to have linked smart contract that is accessible by distributed applications. This smart contract behaves as programmable payloads of the TensorCells and can represent any event associated with the cell. Geohash is used as a basis for this construction because of its conceptual and mathematical simplicity. Another benefit of the Geohash standard is that it is in the public domain. Geohash encodes a geographic location into a short string of letters and digits. It is a hierarchical spatial data structure which subdivides space into buckets of grid shape. Geohashes offer properties like arbitrary precision, similar prefixes for nearby positions, and the possibility of gradually removing characters from the end of the code to reduce its size (and gradually lose precision).

Other geographical indexing schemes could also be used to form Crypto Coordinates, such as the 64-bit H3 index by Uber, S2 Geometry by Google, HEXBIN, or similar. If necessary, conversions can be made using defined functions such as geoToH3 from Uber, which converts geographic coordinates (e.g. latitude and longitude) to a corresponding H3 index at a chosen resolution.

The TensorLocation Crypto Coordinates behave as an index for spatial events (or TensorCells) that works for any kind of transaction on the blockchain. Since Geohashes are intrinsically hierarchical, it also means that a transaction referencing an object, and a transaction referencing probe client located within same location, automatically have a spatial relationship. The approximate maximum resolution of the TensorLocation Crypto Coordinates may be 1cm³.

### Use cases

Building blocks can be used exclusively by a user to run its own app and maintain its own map. Additionally, an LBS provider can provide and run the MEC components to create a unified MEC-level dynamic map across participating users (e.g., car makers). A hybrid scenario can be enabled by using the DLT services to keep track of contributions to the unified map and maintain it with consensus among participants. Even though such a decentralized architecture makes sense for use cases with low latency requirements, which is a natural fit mainly for automotive, it can be adopted for IoT use cases where large volumes of data are generated and consumed in the same geographical region.

### Claim of presence

As discussed above, the issue of a "claim of presence" is a fundamental certificate to ensure a specified probe agent is in a particular position at a certain point in time.

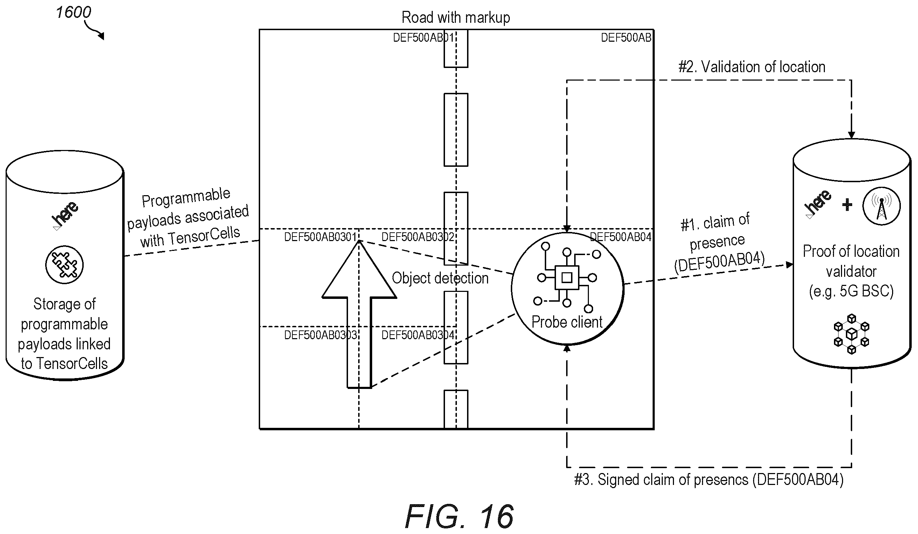

Figure 16 shows an overview of the process for accessing the MEC's services by a probe client nearby, particularly for those that require authentication and verification of location.

For example, a probe client may claim it is present at cell DEF500AB04, where the probe client e.g. can submit information about an object detection. Validation of the location is made via cell/network positioning means by e.g. a telecoms provider. With a signed claim of presence from e.g. the telecoms provider, the probe client is able to use services offered for cells related to DEF500AB04 (AB01,AB02,AB03 (and subdivisions) and AB04), where or from where the observation can have been made. The programable payload is the service that can be provided for e.g. a probe client present at the "right" cell (such as object detection ingestion).

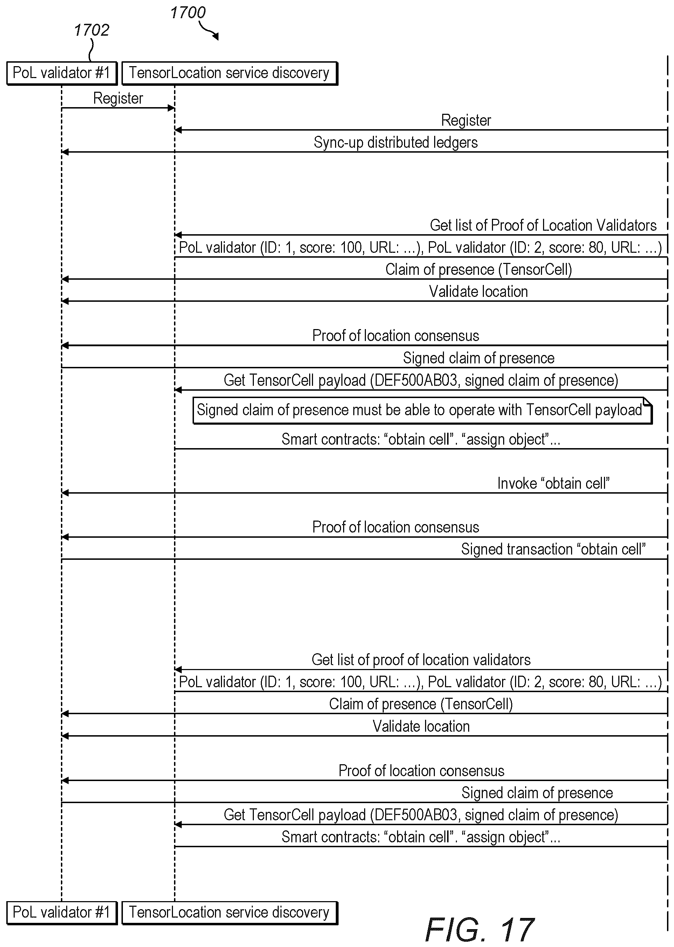

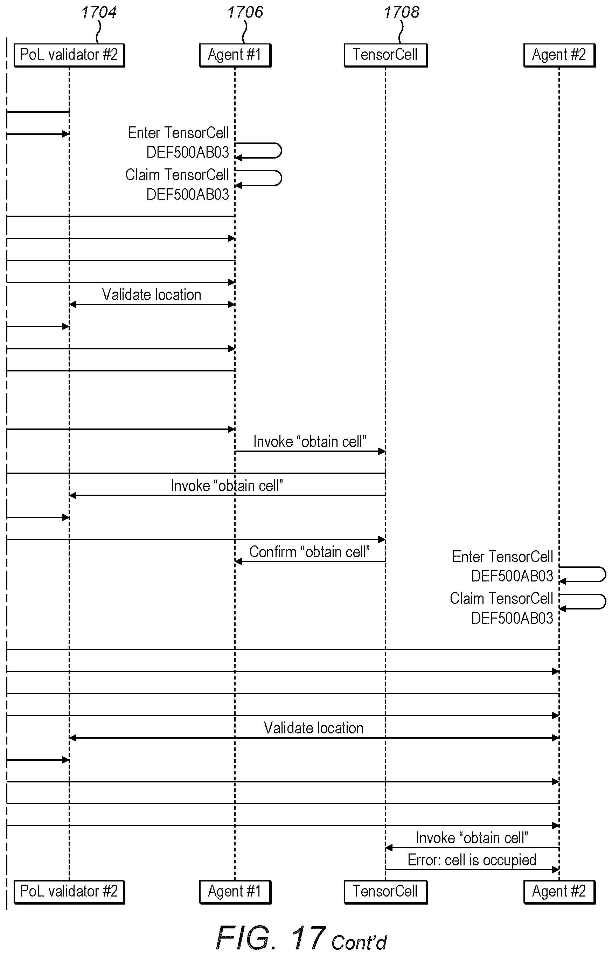

Figure 17 provides a schematic diagram of the TensorLocation claim of presence 1700 in detail.

At the beginning there is a 'registration' process where various 'validation actors' 1702, 1704 become part of the federated ledger system (blockchain based). Then a probe agent 1706 enters into a TensorCell 1708. Consensus mechanisms across the TensorLocation system are activated and a "Claim of presence" validated, signed and bullet proof transaction is written to blockchain and reference passed to the probe agent 1706. This enables and empowers the agent 1706 to run 'smart contracts' associated to the (set of nested) involved TensorCells. The probe agent 1706 is then verified and can safely execute 'smart contracts' assigned to the TensorCell(s) e.g. access and update the content of the TensorCell 1708.

### Example: object recognition

The ability to recognize objects and spatiotemporal events is an important use case for the TensorLocation system.

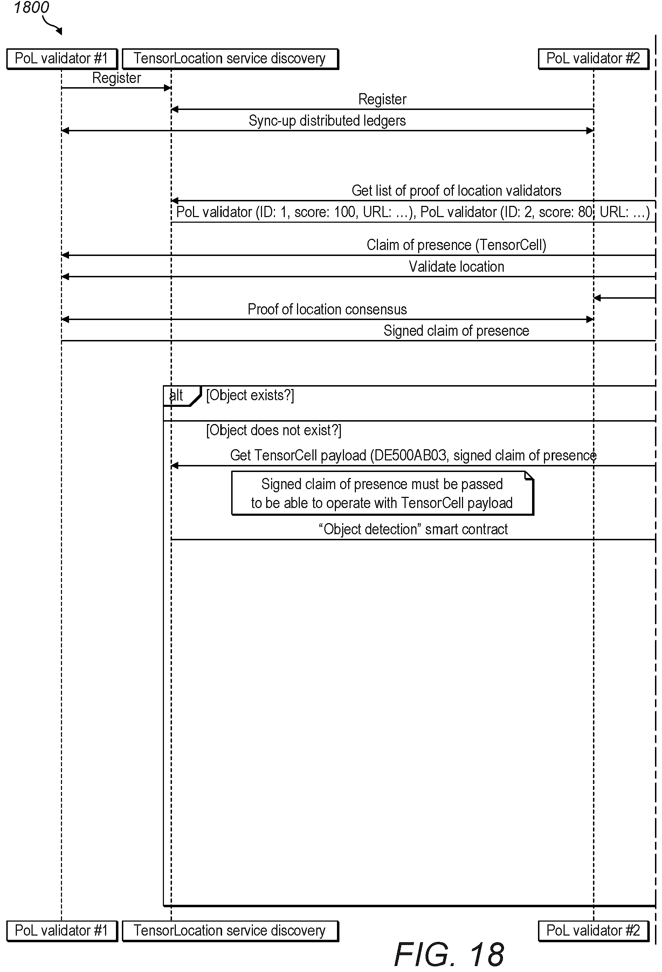

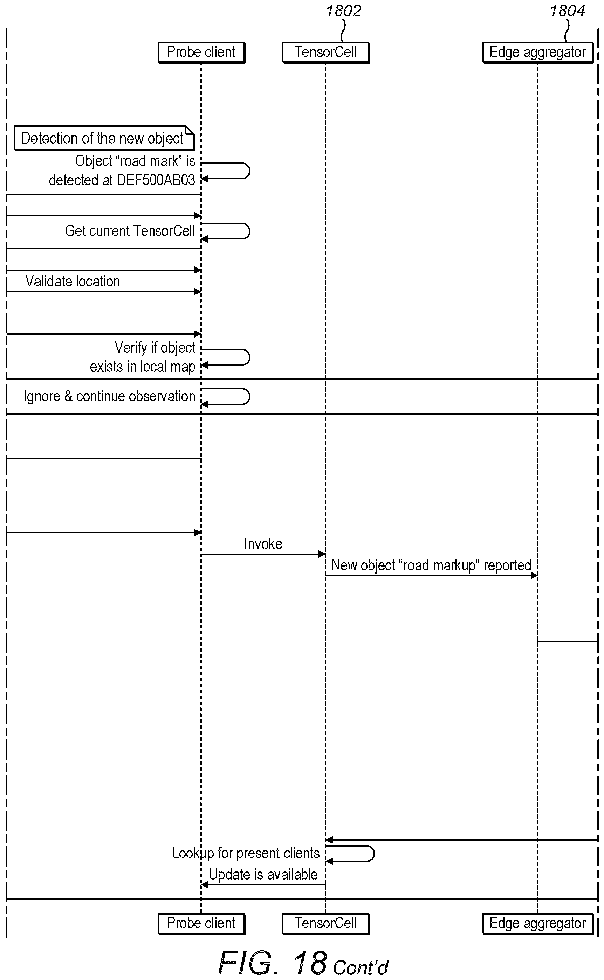

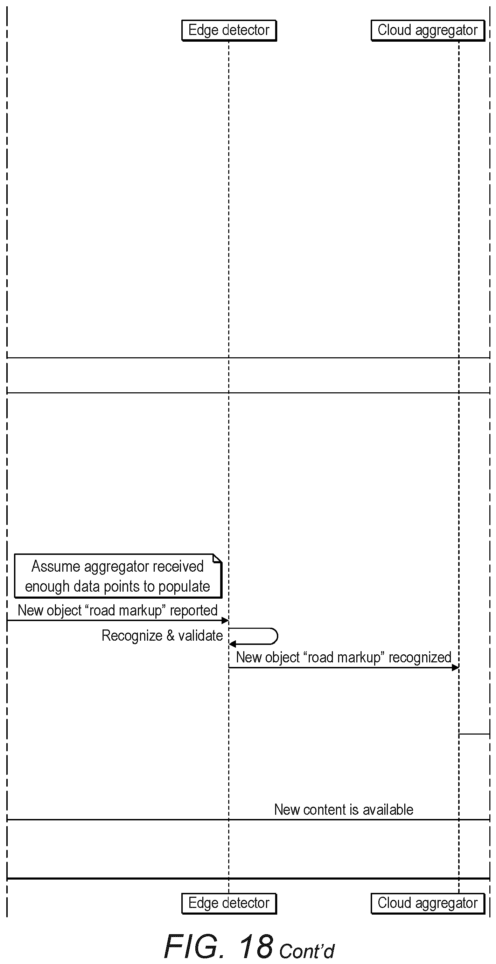

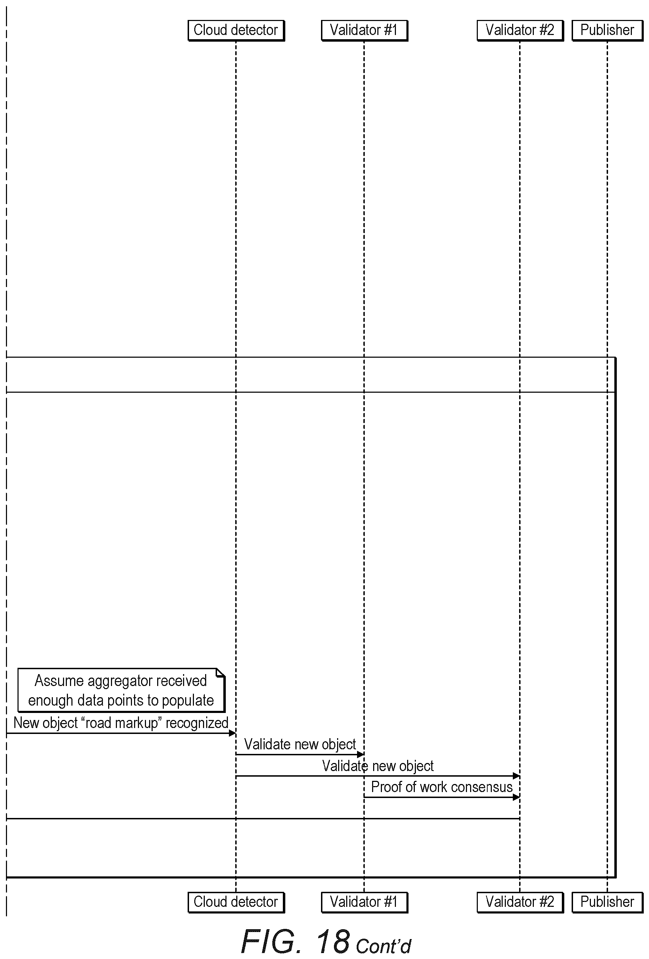

Figure 18 shows a schematic diagram of the TensorLocation object recognition process 1800 in detail. After the registration and the 'claim of presence' certificate issue described above, the probe agent 1802 is able to interact with smart contracts to identify objects and situations related to the TensorCell 1804. The set of federated p2p networks "makers" described above (e.g. detectors, aggregators, aligners and eventually publishers) is appropriately involved (leveraging the TensorLocation protocol) in order to appropriately and in 'quasi real time' include the spatiotemporal object (or situation) in the TensorLocation system. It is important to notice the highly decentralized paradigm which allows great scalability and low latencies by always fulfilling highest criteria in terms of privacy and security.

From the previous section it is already quite clear the disruptive power that TensorLocation will bring not just in the Location Industry but more in general across the entire IOT spectrum of Industries. TensorLocation will become a completely 'new game' and it will unleash lot of new possibilities and scenarios presently unforeseen.

For illustration purposes in this section some of the typical 'location use cases' are discussed with respect to key changes that TensorLocation may introduce.

### Example: dangerous Curve application (DCA)

This is a typical 'location enrichment' use case several OEMs (car manufacturers and car equipment manufacturers) are today working on. The goal is to contextually provide to drivers with warning alerts where an upcoming curve may become dangerous considering speed, and/or road conditions.

A dangerous curve detector is deployed to the in-vehicle map inference engine. The curvature from the external map may be wrong and a different curvature may be detected by the vehicle during driving. This discrepancy can be reported as an update via the MEC client. Depending on the map update rules at the MEC, the update can be recorded at the MEC-level dynamic map, which can then be propagated to other vehicles.

Details may vary depending on the implementation, but at high level the workflow a user needs to follow in order to implement this use case can be the following:
a) Select upfront the region (e.g., Germany) that the user wants to consider for DCA purposes.
b) Load centrally the map for the region and start narrowing down the areas of interest.
c) Augment and enrich the map with other data sets; in this case for example road conditions, weather, curvature radii.
d) Develop a set of AI/ML and/or algorithmic logic that may provide alerts for these situations.
e) Test the algorithm on a quite narrow set of data and ultimately produce "dangerous curve" attribute in a volatile layer that needs to be conflated with other layers.
f) Finally, since this is produced on the backend, the OEM need to ensure data is appropriately streamed into the vehicle.

Based on past experience generally the development of such an application requires about 1 year of a very experienced multidisciplinary team (10-12 people with vendor support). Conversely, with TensorLocation the approach would be dramatically different with a lot of built-in capabilities. The user (most likely the Vehicle Manufacturer/ OEM in this case) already has a private and personalized TensorLocation system fully p2p and distributed where not only curves are already a recognized class of features linked into TensorCell but also the running cars of its fleet are a set of authorized 'probe actors' and TensorLocation agents.

Therefore, with TensorLocation, a use case such as a Dangerous Curve application will result into a simple set of configuration / declarative commands through TensorLocation operators. This use case provides a good example of where a possible cascade of functionalities may be provided as a vehicle moves through a series of TensorCells getting progressively closer to the hazardous TensorCell, which in this case contains the dangerous curve. A first functionality could be to provide a warning that the driver should take over control of the vehicle's autonomous system. If the driver does not do so then a second functionality could be to instruct the autonomous vehicle to slow down to a safe speed.

At a high level the 'pseudo-commands' the OEM should enter from its TensorLocation console may be as follows.
1) When TensorLocation Agent of Type (OEMCarType X) are close to TensorCell with feature of Type Curve (located in Germany), activate executable Neural Model zz1
2) Enable feedback loop: yes

It is easy to recognize how the 'keywords' underlined above directly match the TensorCell structure and operators described above.

Essentially, the tensor algebra enabled by TensorLocation will take care of the appropriate transformation to realize the use cases. Moreover since the system is highly distributed and federated it is quite simple to activate the feedback loop so, in this case, all the OEM fleet cars which are enjoying the dangerous curve alert can also learn about the real situation, they can communicate back the learning (as probe actors), and based on TensorLocation distributed 'audit proof' built in consensus, the neural model for all the rest of the car fleet could constantly improve.

### High Autonomous Driving use cases

A 'holy grail' exists around HAD and its profound implications in the Automotive and more in general across the entire Mobility Industry. However, as of today, some key fundamental limitations are still common across the board:
- The approach is very server centric and does not involve Edge Computing at all.
- The combination of HAD content with the AV perception stack is still very 'ad hoc', not standardized and suffers of several limitations.
- While existing approach may be acceptable for an initial set of precursory implementations (on high class type of cars and mostly for marketing purposes) there is no real line of sight yet if this may scale to truly become an industrial possibility; lack of real time, lack of a continuous feedback loop, lack of an efficient set of monitoring tools are all serious concerns.
- Finally, even if most modern approaches include multisource (e.g., satellite, sensor, imagery, etc.), so far the 'central HAD engine' needed to deal with huge amount of raw sensor data may cause serious concerns in terms of computing power and ultimately computation costs.

The leverage of TensorLocation in the HAD set of use cases will profoundly change the way HAD is conceived today and it will allow a solid industrialization for 'autonomous driving'
- Every OEM, through TensorLocation, may have its own HAD system flavor so they can focus their efforts and IP on truly differentiating aspects (e.g., user experience augmentation, new business models, etc.) rather than spending large amounts of time in the manipulation of HAD attributes.
- Today HAD implementation has two very distinct phases: 1) coverage where an initial set of HAD maps is computed for the regions under scope; and 2) maintenance where the map is kept updated under some pre-defined level of freshness. With TensorLocation the entire set up is now far more straightforward: the OEM will have a set of TensorCells, each TensorCell will have its attribute and semantic relationships to make easier the naming and identification of related features (e.g. 'the lane on A81') and each TensorCell will be accessed through space and time coordinates (e.g., 'give me the state of this lane now' or, 'I want to see changes of this lane over past 3 months'.)
- TensorLocation will leverage input coming (as neural model's quanta) from a variety of endpoints (TensorCell) and already pre-processed at the endpoint. In other words, collected data will be processed (e.g. for ML-model training locally on device), and derived information will be used as input when cells exchange between each other or TensorLocation services e.g. commit of the local ML-model into the global model. This produces several advantages:
   ∘ the amount of data to be transmitted is significantly reduced (10 times factor estimate) with dramatic benefits in terms of latency reduction.
   ∘ since the data will be already processed at the endpoint (through a neural network, for example), it becomes easier to further encrypt that and really ensure a 'privacy by design' implementation.
   ∘ a built-in robust consensus mechanism across participants guaranteeing an increased level of fidelity concerning ground truth (e.g., 'if I have a dozen 'probe actors' who are alerting about a change in the unit of time, there is high probability the change is real')
- TensorLocation will also naturally open new business models in the HAD space; for example an OEM may decide to partner with a parking operator or an EV charging provider and just through a declarative command, establish a set of 'micro rewarding' (sort of virtual coupons or coins) for a group of actors (e.g., car drivers in this case) who may decide to use those parking and/or EV service facilities.

### Example: a new shopping experience

A few retailers are currently working on how to dramatically innovate around the entire shopping experience at the stores with the goal to eliminate cashiers, lines, and waiting times etc.

TensorLocation can enable a cashier-less automated secure shopping experience, where a smart store tracks in real-time the status of its shelves using TensorLocation. When there is a status update on the blockchain for a shelf in the store, the closest customer's cart is updated. When the customer leaves the store, their TensorLocation wallet is charged.

TensorLocation may become a great enabler for this type of use cases and it can 'democratize' these use cases without requiring a large amount of specialized infrastructure and dedicated AI/ML machinery that only a giant enterprise can afford.

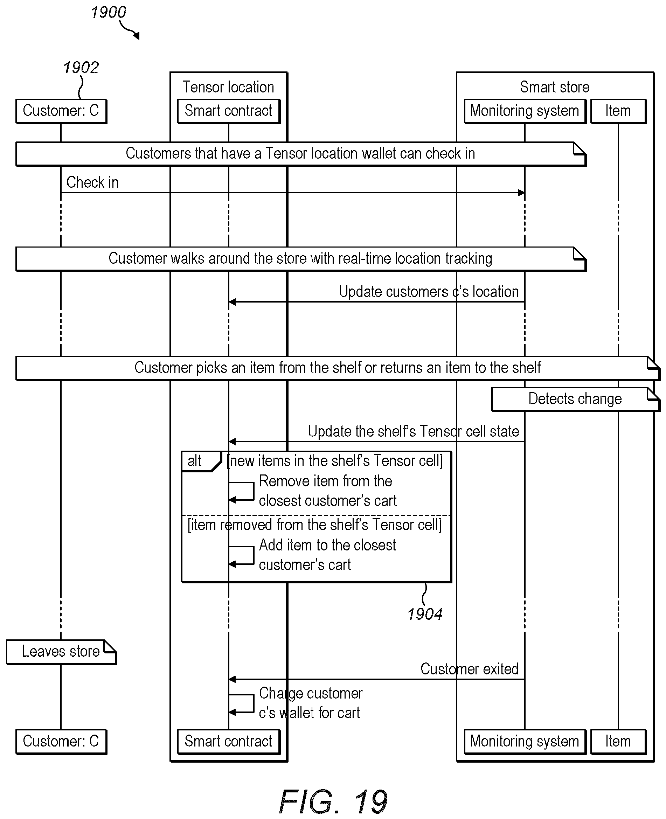

Figure 19 shows exemplary steps of a smart store process using TensorLocation:
1) Enable (for example, through the use of a smartphone app) TensorLocation for customer C entering in the store. At this point customer C will be a TensorLocation agent 1902.
2) Identify (through pressure sensors, RFID, NFC, computer vision techniques or the like) the link between the merchandise on the shelves and the related TensorCells
3) For the TensorCells that are related to the goods on the shelf add a declaration that says:
   a. "when TensorCell for good X is changing, and, TensorCell for good X is close to customer C, then charge customer C and activate a transaction from their wallet" concerning the good which has been removed.

In this case, the cells (i.e. TensorCells) may be associated with different shelves of the store. The validity-time-interval for each TensorCell may correspond to a time interval for which the item will be on the shelf. The semantic-location-data may represent a product code, name and/or type. The executable code instructions may be those of the smart contract (such as marking an item as removed from the shelf and added to the customer's basket and ultimately charging the customer), and the instructions may be executed by one or more edge nodes in the shop.

### Example: next generation Data Marketplace

App owners can interact with other apps at the same MEC-level by subscribing to data streams (sensors, neural models, etc.) available in the region allowing more sources or better models to be used for a more accurate and enriched map. DLT services enable the high transaction rate among apps (customers) on the same MEC, vehicles or IoT devices.

### Example: IoT Sensor Data Marketplace

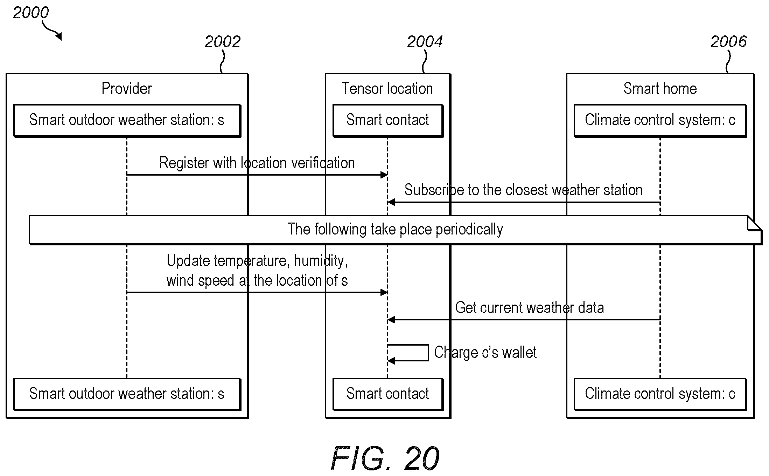

Figure 20 shows an example of IoT sensor data transactions 2000 on TensorLocation. TensorCells store weather data, which can be consumed by smart home systems. A smart contract of the TensorLocation system also handles the accounting of transactions.

In the illustrated example, a weather station 2002 of a weather provider registers with the smart contract 2004, and a climate control system 2006 of a smart home subscribes to the closest weather station (in this case the weather station 2002). The weather station 2002 then periodically updates weather values at the smart contract such as temperature, humidity, wind speed etc. based on sensor data, and the climate control system periodically requests current weather data from the smart contract. The smart contract then issues a charge to the owner of the climate control system 2006, e.g. as a regular subscription or for each weather request.

In this example, the cell (i.e. TensorCell) of the smart contract is associated with geographical area containing the weather station 2002 and/or the climate control system 2006. The validity-time-interval may be the duration for which the weather values are deemed to be valid (e.g. one hour from the most recent update). The semantic-location-data may be one or more of sensor type (e.g., temperature, wind, humidity), sensor unit (e.g., Celsius, Fahrenheit), sensor device information or similar. The executable code instructions may be those of the smart contract, and the instructions may be executed by an edge node in the same geographical area as the weather station 2002 and the climate control system 2006.

### Example: cooperative mapping and mobility

A digital map usually contains a variety of features/objects that range from permanent/static to ephemeral/dynamic. Among the most dynamic features/objects of the map are locations and velocities of road users such as vehicles, pedestrians, bikes as well as dynamic elements such as traffic lights, level crossing barriers etc.

No single vehicle maker can capture such the state of the world by its own fleet. In order to realize use cases based on this dynamic state such as flow management at intersections or ensuring safety of vulnerable road users, observations from as many vehicles must be shared and fused at the MEC-level, instead of a siloed approach, as e.g. a vehicle maker's fleet would do. The efficiency (saved time and fuel) and safety (saved lives and injuries) gained by such high coordination can be used to compensate road users according to their contributions, which can be tracked by DLT.

In addition to this read-only view of the world, TensorCells can be used for finer grained control by negotiating the exclusive use of a TensorCell (in space and time) via DLT and consensus services to implement safer actions such as overtaking, road crossing, coordination at intersections and traffic signals etc.

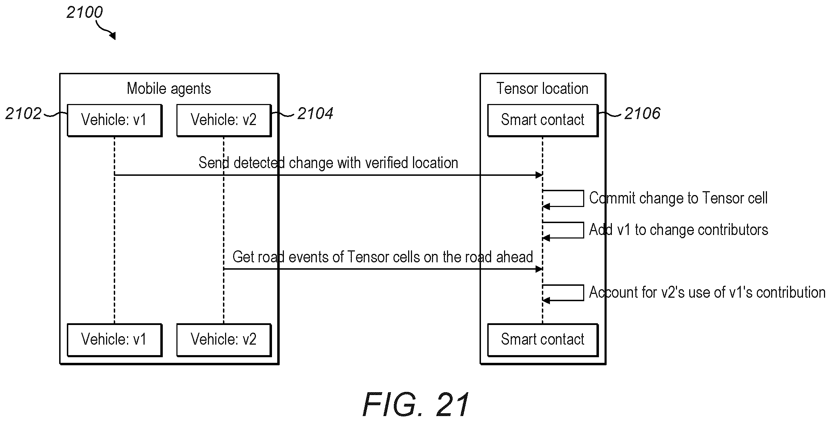

Figure 21 shows an example of cooperative mapping 2100. Mobile agents cooperate on TensorLocation to maintain the dynamic state (e.g., hazards, temporary changes) of the road network map. The mobile agents may also update changes to the road network map by exchanging/contributing other sensor information pertaining to static road features and/or roadside objects. Detection of permanent changes (e.g., new road, new lane, changed traffic sign) or transient changes (e.g., accident, road work, lane closure) in the road network can be done by in-vehicle change detectors and sent to the MEC-level. Depending on the map update rules at the MEC, the update can be recorded at the MEC-level dynamic map, which then gets propagated to other vehicles.

A first vehicle 2102 may send a detected change to the smart contract 2106 (preferably having verified its location, i.e. that it is in the location covered by the TensorCell associated with the change). Upon receiving the detected change, the smart contract 2106 executes code to commit the change to the TensorCell. A second vehicle 2104 may then request details of road events on TensorCells ahead and may be provided with information including the change detected by the first vehicle 2102.

In this case, the cell (i.e. TensorCell) of the smart contract is associated with the geographical area containing the first vehicle 2102 and the section of road for which there has been a change. The validity-time-interval may be an expected duration of the change detected by the first vehicle 2102 (e.g. for a traffic collision, a default value such as one hour may be chosen). The semantic-location-data may be a change detection message, which can optionally conform to the SENSORIS sensor interface specification standard. The executable code instructions may be those of the smart contract, and the instructions may be executed by an edge node in the same geographical area as the first vehicle 2102.

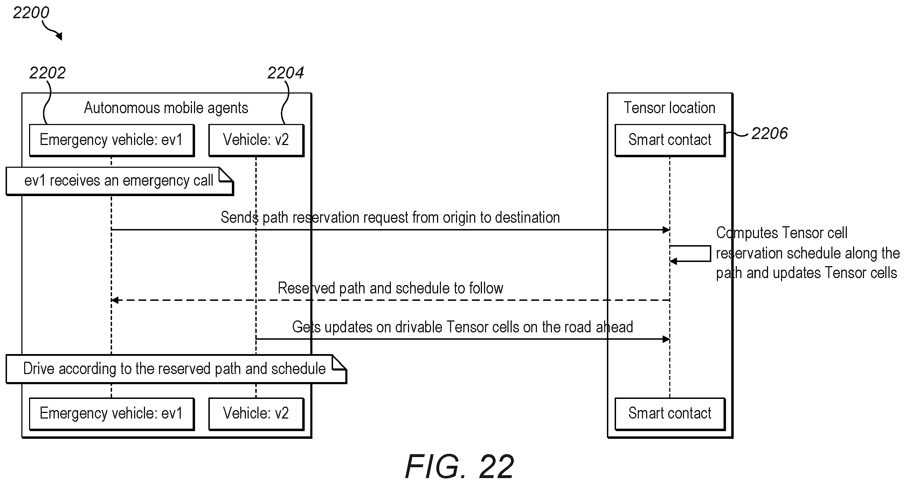

Figure 22 shows an example of cooperative mobility 2200 in which vehicles can reserve a certain section of a road for e.g. planner maneuvers such as overtaking, lane changes, turns at intersections etc. Autonomous vehicles cooperate on TensorLocation to reserve drivable TensorCells at certain time intervals. This is enabled by the time range of validity attribute of TensorCell.

In the illustrated example, an emergency vehicle 2202 may receive an emergency call and send a path reservation request to a smart contract 2206 of a TensorCell. The smart contract 2206 then computes a TensorCell reservation schedule along the path and updates TensorCells and replies to the emergency vehicle 2202 with details of the reserved path and the schedule to follow. A second vehicle 2204 may request updates on drivable TensorCells on the road ahead and determine that some of the cells are reserved by the emergency vehicle 2202. The vehicles can then both drive according to the reserved path and schedule.

In this case, the cells (i.e. TensorCells) may be those corresponding to the geographical area containing the emergency vehicle 2202 and the reserved path. The validity-time-interval for each TensorCell corresponds to the time for which the TensorCell has been reserved for the emergency vehicle 2202. The semantic-location-data may be a special cell reservation tag that should be respected by road users. The executable code instructions may be those of the smart contract (such as computing and reserving the path), and the instructions may be executed by one or more edge nodes in the same geographical area as the TensorCells along the path.

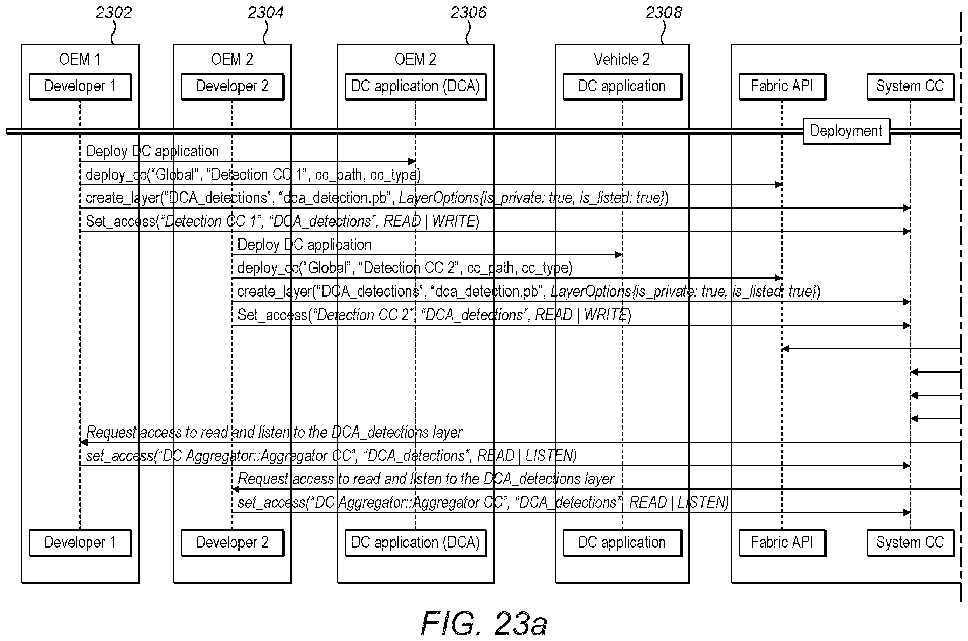

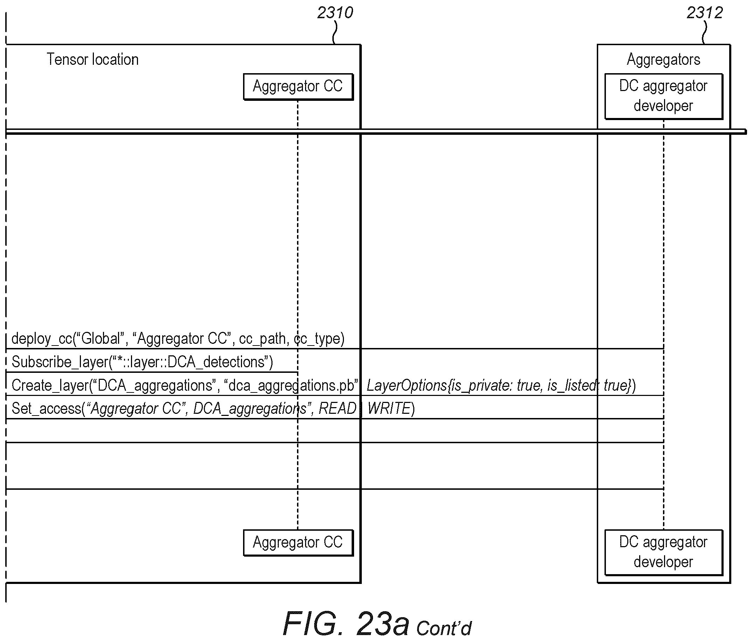

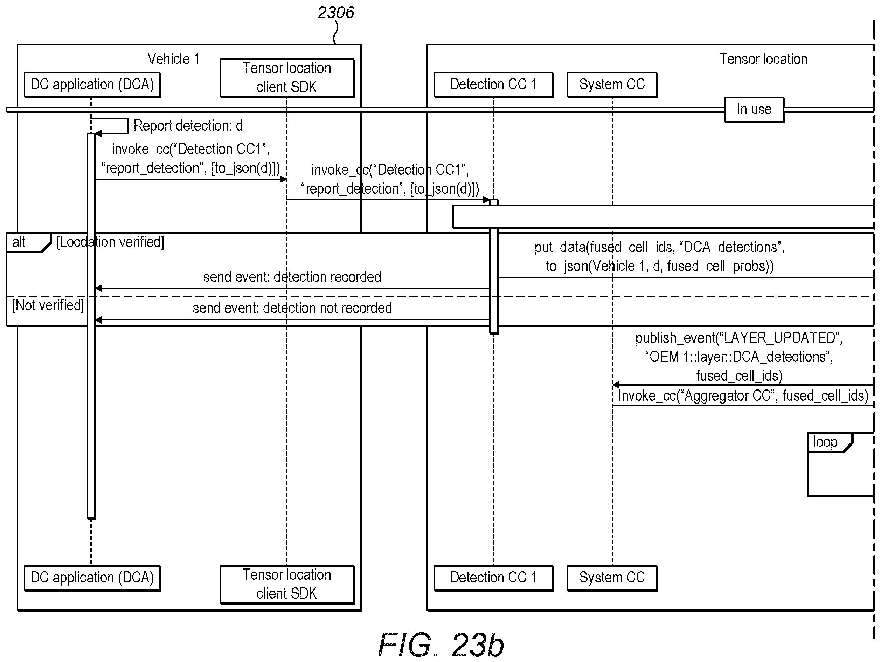

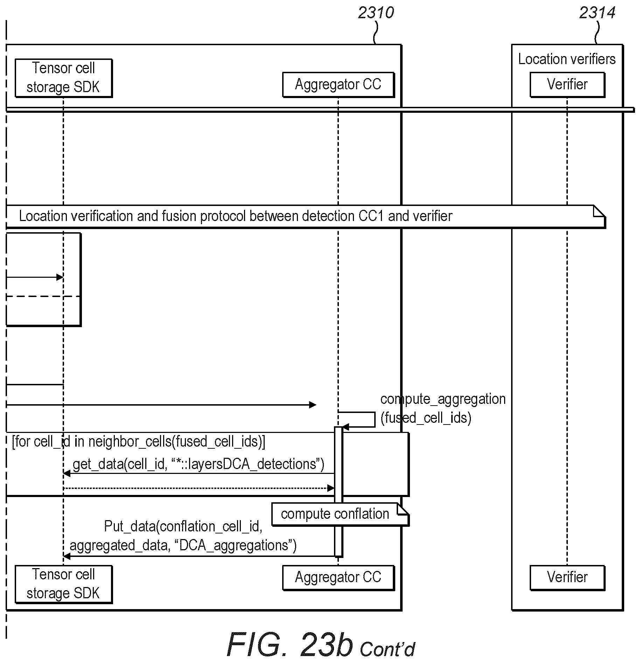

Figures 23a and 23b show an example of cooperative mapping of dangerous curves involving a first OEM 2302 associated with a first vehicle 2306 and a second OEM 2304 associated with a second vehicle 2308.

Vehicles are increasingly equipped with on-board capabilities to detect their surroundings such as road signs, vehicles, pedestrians and so on. One of the challenges that is faced by OEMs is to aggregate the in-vehicle observations among the whole fleet and derive a real-time and always up-to-date map.

The cooperation can be within the fleet of a single OEM or among the fleets of multiple OEMs. The Tensor Location System lays the groundwork upon which OEMs can deploy and operate their cooperative mapping applications.

One such application is the dangerous curve application (DCA) mentioned earlier, in which the curvature of a section of the road is computed by the vehicle and marked as a dangerous curve when it is above some threshold.

Figure 23a shows the deployment phase of DCA involving the first OEM 2302 and the second OEM 2304 and an aggregator actor 2312 in communication with a TensorLocation system 2310. The OEMs 2302 and 2304 are responsible for developing in-vehicle applications that detect dangerous curves and interact with TensorLocation using a client SDK. The OEMs also develop and deploy the detection chain code running in TensorLocation. Such third party chain code can utilize an API exposed by System Chain Code (System CC).

Each OEM creates a private layer for storing the detections by its fleet. A cooperating aggregator can be given access to read these detection layers of various OEMs. The aggregator deploys the aggregation algorithm as a chain code that subscribes to write events in the detection layers and writes results into a dangerous curve aggregations layer. This layer can be made available to OEMs.

Figure 23b shows the use phase of DCA. Upon detection of a dangerous curve by the first vehicle 2306, the first vehicle 2306 reports the dangerous curve to the TensorLocation system 2310 by invoking an endpoint on the detection chain code, which in turn registers it in the Tensor Cell Storage. Depending on availability, the location of the first vehicle 2306 can be verified by a location verifier 2314. A write on a detection layer, which has been subscribed to by an aggregator, triggers the corresponding chain code that computes a conflated location for the dangerous curve and writes it to storage.

In this example, the TensorCell is the cell corresponding to the geographical area containing the dangerous curve. Because road topology is a relatively static feature, the validity-time-interval for each TensorCell may be a semi-open time interval starting from the time of first confirmed observation. The semantic-location-data may be a map attribute that marks the cell as a dangerous curve. The executable code instructions may be those of the smart contract (i.e. the code invoked when a vehicle reports the dangerous curve), and the instructions may be executed by one or more edge nodes in the same geographical area as the TensorCell associated with the dangerous curve (i.e. in the vicinity of the detected dangerous curve).

### Example: private mapping

A user can create a private, virtual 3D representation of their facilities (e.g., a mine, agriculture fields/gardens, plants, factories, etc.), and configure cells to behave differently depending on their payload.

A user may be a big parcel delivery service that leverages robots to store and dispatch parcels automatically. These robots must navigate through storage facilities/units efficiently. Every parcel has assigned unique id. When parcels are loaded/offloaded, it is unregistered/registered into the cell where it is stored.

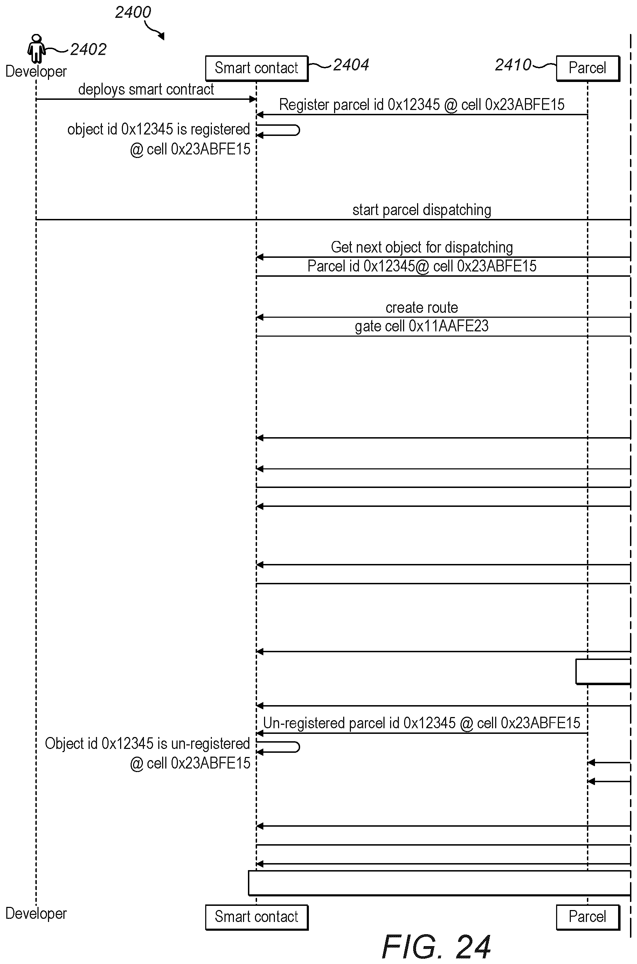

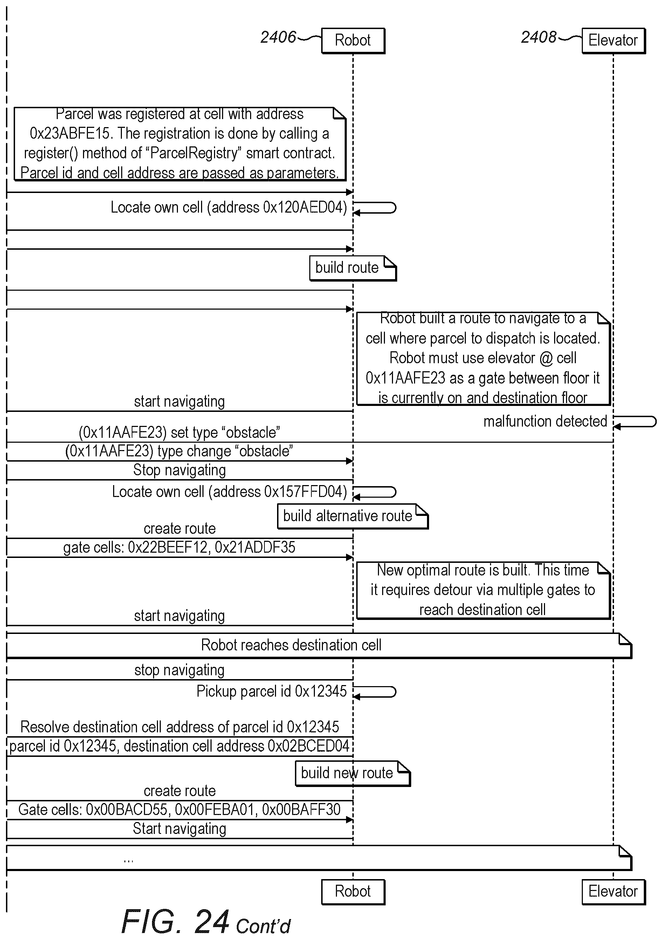

Figure 24 shows an example of private mapping 2400 for a parcel dispatch warehouse.

A developer 2402 working for the user develops smart contracts 2404 using TensorLocation SDK for the solution to operate robots 2406 on storage facilities. This smart contract provides the following methods:
1. set and get cell type,
2. register / un-register object with given id within the cell,
3. get next object for dispatching to pop the parcel out of the queue,
4. create route to build the route from origin to destination by going through all the gates avoiding obstacles,
5. start/stop navigating to report to TensorLocation that a robot is going through the created route. This method schedules the cells where robot must pass so other robots will not interfere. In case type of the cell in the route changes, corresponding robot is notified and needed action is taken.

The Developer then deploys this smart contract into the MEC into the corresponding TensorLocation channel.

By default, TensorCells provide the ability to get cell addresses (geolocation index), set time validity for how long the configured payload of the cell is valid.

For their purpose, the developer defines three types of the cells: empty, obstacle, gate. By leveraging the capabilities of TensorCells to assign cell type, the developer assigns a corresponding type to the cells to create a virtual 3D representation of the facilities to enable robots to navigate automatically within the facilities. Walls and storage shelves are marked as obstacles. Doors between storage rooms or elevators 2408 between floors are marked as gates. Cells covering areas free of obstacles are left empty. Gate cells connect free areas and help robots in navigating. Such configuration allows robots to build routes. For example, to get from a storage room on 1st floor to the room on the 3rd floor, a robot must pass all the gate cells between original and destination cells avoiding obstacles (cells with corresponding type). All the objects within the facilities can communicate with cells to help robots to achieve their goal to dispatch all the parcels 2410 in the most optimal way.

In this case, the cells (i.e. TensorCells) may correspond to the different regions of the storage facility (e.g. rooms, obstacles such as walls, and 'gates' such as doors and elevators). The validity-time-interval for the TensorCells denotes the interval that an object occupies the cell. The semantic-location-data may be the type of the object that occupies the space (e.g. wall, door, shelf, parcel etc.). The executable code instructions may be those of the smart contract (such as registering parcels, creating routes etc.), and the instructions may be executed by one or more edge nodes within the facility (e.g. an edge node in each room or part of a room).

### Example: searching and query functions

The TensorLocation system can be used to enable highly efficient and flexible searching and query functionality in relation to TensorCells. Cells can be searched/queried using a Structured Query Language (SQL) or any other similar query language relevant to any relational database management system. As described above, a cell includes semantic location data, which may describe any information relevant to the cell. The executable code instructions can include one or more relevant SQL functions. Examples of relevant SQL functions can include geographical operations, enabled by the monoidal category structure that underpins the TensorLocation system. These geographical operations can correspond to the union, intersection, relative complement and symmetric difference operations discussed above. Further operations can correspond to the distance between first and cells operation and the selection of a pair of points from within the first and second cells operation, as also discussed above. All of these operation can thereby be executed in the data domain, thus advantageously avoiding the need to use more complex geographical functions directly.

In this way, the time valid location based information can include the results of any SQL search or query relating to one or more of the cells in the relevant environment.

### Example: car parking applications

A practical example of where the TensorLocation system can provide advantageous functionality is in relation to car (or vehicle) parking applications. A car user who wishes to visit a particular location may require a parking space nearby the location. However, other factors may also influence the choice of parking space, such that the very closest available parking space may not necessarily be the most appropriate choice. For example, to get to their desired location from a parking space, the location of pedestrian exits, elevators, escalators, or other amenities that may assist the user in making the final part of their journey on foot to their destination, may be important considerations. The semantic location data for a particular cell may include information about the location of available parking spaces (with their availability determined to exist within the predetermined validity time interval), relevant pedestrian exits, elevators, escalators or other such infrastructure, together with the location of the desired destination.

Suitable executable code instructions can then be used to analyse the semantic location data to determine a suitable available parking space. This analysis can provide the time valid location based information that includes the position of a suitable available parking space, or suitable spaces if the user is accompanied by others travelling in other vehicles. It may also include the relative distance(s) between two or more parking spaces to enable determination of the suitability of the spaces for a party of multiple vehicles travelling together, where their users wish to park in close proximity to one another. The size of any give parking space may also be considered, to determine the suitability of the space for parking a vehicle, especially if the vehicle is relatively large or requires additional space to accommodate, for example the ingress/egress of a disabled user. The various distances between available parking space(s), pedestrian exit(s), elevator(s), escalator(s) or other amenities may also be determined, to establish the suitability of a parking space, given the needs of the user(s).

In this way, the TensorLocation system can provide highly personalized, time-sensitive, information about suitable available parking spaces, and potentially about suitable routes between those spaces and a user's desired destination. This can enable a highly suitable selection from available parking spaces that allows a user to get to their destination is a convenient and time-efficient way.

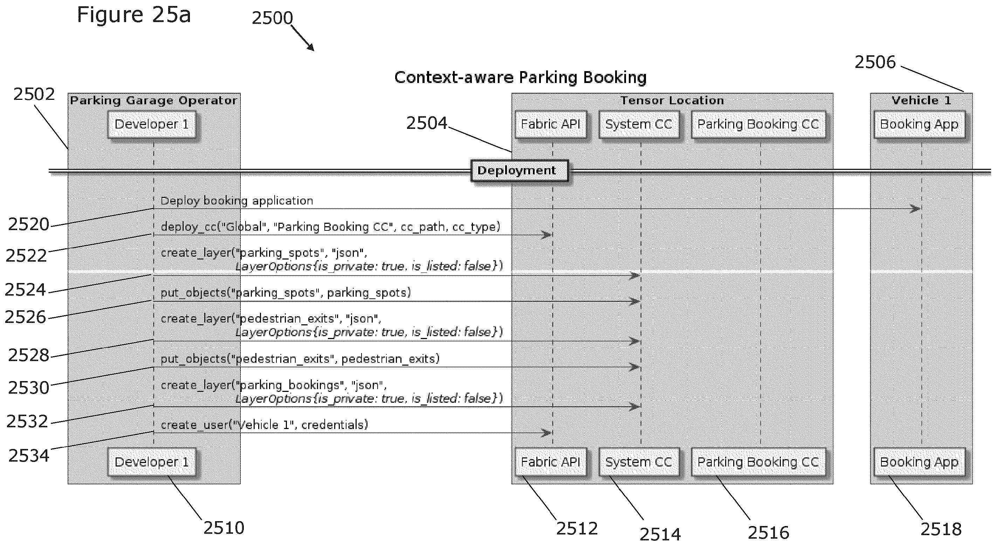

Figure 25a shows an example of a context-aware parking booking initialization system 2500. The system 2500 includes a parking garage operator block 2502, a TensorLocation block 2504 and a vehicle block 2506. The parking garage operator block 2502 includes a developer 2510. The TensorLocation block 2504 includes a fabric API 2512, a system chain-code 2514 and a parking booking chain-code 2516. The vehicle block 2506 includes a booking application 2518. The system 2500 can be used to set up a parking booking system, such that it is ready for use by an end user that wishes to identify and book a suitable parking space.

At a first step 2520, the developer 2510 deploys the booking application 2518. At a second step 2522, the developer 2510 provides a deployment chain-code, including the parking booking chain-code 2516, to the fabric API 2512. At a third step 2524, the developer 2510 provides 2524 a first create_layer, for parking spots, to the system chain-code 2514. At a fourth step 2526, the developer 2510 provides first-objects, in the form of parking spots, to the system chain-code 2514. At a fifth step 2528, the developer 2510 provides a second create_layer, for pedestrian exits, to the system chain-code 2514. At a sixth step 2530, the developer 2510 provides second-objects, in the form of pedestrian exists, to the system chain-code 2514. At a seventh step 2532, the developer 2510 provides a third create_layer, for the parking bookings, to the system chain-code 2514. At an eighth step 2534, the developer 2510 provides create_user details, including details of a vehicle to the fabric API 2512.

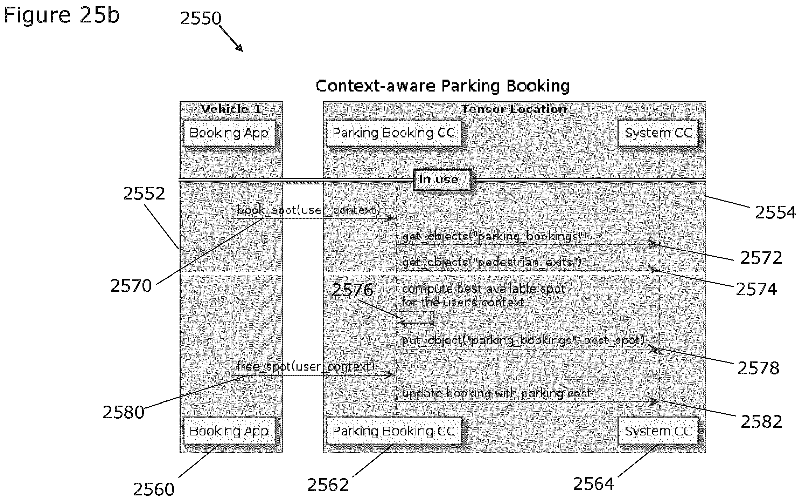

Figure 25b shows an example of an operational context aware parking booking system 2550. Once the parking booking system has been initialized with all necessary information such as is depicted above in relation to figure 25a, then the system 2550 can be used by a user to make parking bookings. The system 2550 has a vehicle block 2552 and a TensorLocation block 2554. The vehicle block 2552 includes a booking app 2560. The TensorLocation block 2554 includes a parking booking chain-code 2562 and a system chain-code 2564.

At a first step 2570, the booking app 2560 sends a booking spot request, including user context details, to the parking booking chain-code 2562. At a second step 2572, the parking booking chain-code 2562 sends a get object for parking bookings to the system chain-code 2564. At a third step 2574, the parking booking chain-code 2562 sends a get object for pedestrian exits to the system chain-code 2564. At a fourth step 2576, the parking booking chain-code 2562 determines the best available parking spot for the user's context. At a fifth step 2578, the parking booking chain-code 2562 provides a put object for the best available parking spot to the system chain-code 2564. At a sixth step 2580, the booking app 2560 provides a free spot request, including the user context details, to the parking booking chain-code 2562. At a seventh step 2582, the parking booking chain-code 2562 provides an update booking with parking cost information to the system chain-code 2564 to enable the booking of the free spot for use by the user.

### Computer program product

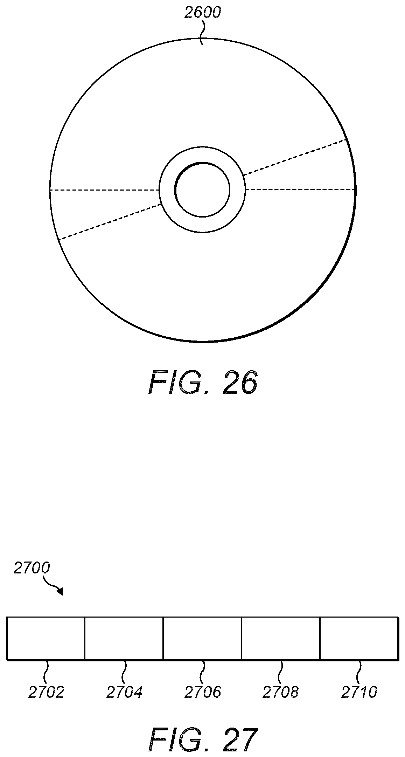

Figure 26 shows an example computer program product 2600 (equivalently, a computer readable memory medium) that contains instructions that, when executed, cause a system (or apparatus) as described in relation to figure 7, to at least perform the steps of any of the methods described herein.

### Data structure

Figure 27 shows a data structure 2700 for providing time-valid location-based information for an environment defined by a plurality of cells, each cell comprising a respective location with a range based on a geographical extent of the respective cell within the environment. The data structure 2700 comprises data defining a series of blocks of information. A first block 2702 is representative of a header. A second block 2704 is representative of a respective predetermined validity-time-interval. A third block 2706 is representative of a respective semantic-location-data relevant to the respective location. A fourth block 2708 is representative of respective executable code instructions configured to operate on the respective semantic-location-data to enable determination of respective time-valid location-based information upon execution of the respective code instructions by a first edge computing apparatus proximal to the respective location. A fifth block 2710 is representative of a footer. The respective time-valid location-based information is valid within the respective predetermined validity-time-interval. The data structure may also define a blockchain operative on an edge computing network comprising the first edge computing apparatus and/or a smart contract for one of the cells comprising the respective executable code instructions for the cell.

It will be appreciated that the second block 2704, the third block 2706, and the fourth block 2708 may be positioned in any order with respect to one another. It will be further appreciated that additional blocks of data may also be added to the data structure 2700 without compromising its essential functionality. Further, the data structure 2700 may conform to any standard data protocols.

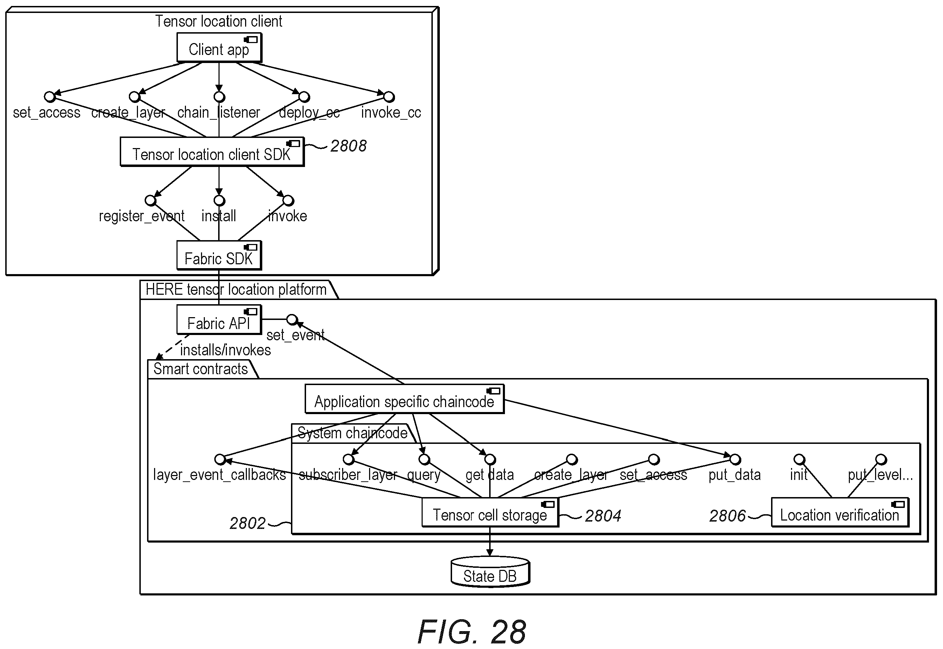

The main components of the TensorLocation system are shown in Figure 28. At its core, TensorLocation provides some platform services implemented as System Chain Code 2802 (i.e. code residing on the blockchain/distributed ledger). These services are the Tensor Cell Storage 2804 and Location Verification 2806 (and Consent Management).

Tensor Cell Storage 2804 supports storage related functions. TensorCell data can be grouped in layers. Layers have access control rights. TensorCell data can be queried.

Other chain code can subscribe to layer updates. Tensor Cell Storage 2804 may provide the following functions:
- create_layer - create new layer of data in the system. Layer is chain code scoped [only specific chain code has access to specific layer], if no chain code name provided it's scoped to system chain code [a global chain code which can be accesses by all system users]. Layers can represent specific data structures in e.g. protobuf format, for such case protobuf schema must be submitted when creating layer.
- delete_layer - deletes layer
- put_data - saves data into the specified layer and related to the current cell
- get_data - retrieves some data from layer
- delete_data - deletes data record from layer
- list_layers - returns list of layers this cell associated with
- query - returns data based on query.

Location Verification 2806 provides endpoints for both location consumers and location verifiers to carry out the Location Verification Protocol. (Consent Management provides endpoints to end users to manage consent for the use of their private data and consent for location verification.)

The Tensor Location Client SDK 2808 is a library that provides functions to utilize Tensor Location Platform services at the client side.

The Tensor Location Client SDK may provide a TensorClient class with the following functionality:
- get_tensor_cell - get an instance of TensorCell class by the cell id.
- create_layer - create new layer of data in the system. Layer is chain code scoped [only specific chain code has access to specific layer], if no chain code name provided it's scoped to system chain code [a global chain code which can be accesses by all system users]. Layers can represent specific data structure in e.g. protobuf format, for such case protobuf schema must be submitted when creating layer.
- delete_layer - deletes layer
- deploy_cc - deploys new chain code. Chain code is associated with some cells, those cells can be specified by providing cell ids or query that will return some cell ids.
- invoke_cc - invokes chain code and provides set of cells this chain code will affect by specifying cells ids or query
- listen_to_event - sets handler for some specific event that will be fired by some chain code

The Tensor Location Client SDK may also provide a TensorCell class with the following functionality:
- ID - tensor cell id [geohash but data lives in data] in the format of geohash that contains coordinates and level
- put_data - saves data into the specified layer and related to the current cell
- get_data - retrieves some data from layer
- delete_data - deletes data record from layer
- invoke_cc - invokes chain code on the current cell
- add_cc - adds current cells id to the list of associated cells of chain code
- list_layers - returns list of layers this cell associated with
- query - returns some data based on query.

A Tensor Location application can comprise a client application and application-specific chain code. The client application uses Tensor Location SDK and interacts with the application-specific chain code and System Chain Code.

In the above disclosure, the terms probe actor, probe agent and probe client may be used interchangeably to refer to a device such as a user device or user equipment. The user device may be a device such as a smartphone, tablet computer, laptop computer, desktop computer etc., or it may be e.g. specialized vehicle mapping equipment or navigational systems. Probe data may be collected by the user device/probe actor and provided to a remote entity.

More specifically, probe data (e.g., collected by a mobile device) may be representative of the location of the probe actor (or a vehicle associated with the probe actor) at a respective point in time and may be collected while a vehicle is traveling along a route. The probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like.

The probe actor may also collect data relating to environmental features around the probe device by including sensor mechanisms configured to capture the probe actor's environment, i.e. objects and features perceivable at the probe actor's location. These sensor mechanisms may include radar, infrared, ultrasonic, and vision-oriented sensors such as image sensors and light distancing and ranging (LiDAR) sensors.

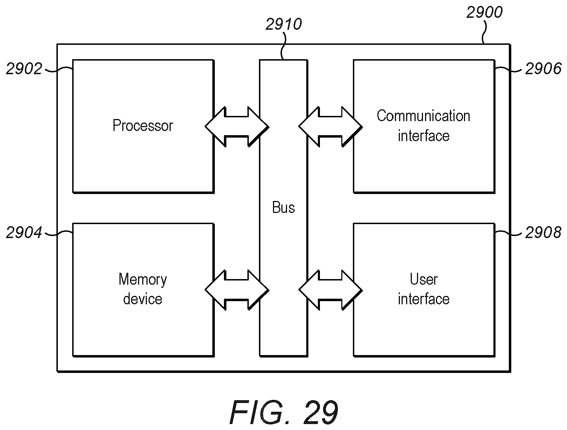

An example embodiment of a TensorLocation system and/or MEC device may be embodied in an apparatus 2900 such as that shown in Figure 29. The apparatus 2900 may include or otherwise be in communication with a processor 2902, a memory device 2904, a communication interface 2906, and a user interface 2908. In some embodiments, the processor 2902 (and/or co-processors or any other processing circuitry assisting or otherwise associated with the processor 2902) may be in communication with the memory device 2904 via a bus 2910 for passing information among components of the apparatus 2900. The memory device 2904 may be non-transitory and may include, for example, one or more volatile and/or non-volatile memories. In other words, for example, the memory device 2904 may be an electronic storage device (for example, a computer readable storage medium) comprising gates configured to store data (for example, bits) that may be retrievable by a machine (for example, a computing device like the processor 2902). The memory device 2904 may be configured to store information, data, content, applications, instructions, or the like, for enabling the apparatus 2900 to carry out various functions in accordance with an example embodiment of the present invention. For example, the memory device 2904 could be configured to buffer input data for processing by the processor 2902. Additionally or alternatively, the memory device 2904 could be configured to store instructions for execution by the processor 2902. The communication interface 2906 may provide location estimates for wirelessly connected clients, e.g. network-based positioning techniques.

The processor 2902 may be embodied in a number of different ways. For example, the processor 2902 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 2902 may include one or more processing cores configured to perform independently. A multi-core processor may enable multiprocessing within a single physical package. Additionally or alternatively, the processor 2902 may include one or more processors configured in tandem via the bus 2910 to enable independent execution of instructions, pipelining and/or multithreading.

In an example embodiment, the processor 2902 may be configured to execute instructions stored in the memory device 2904 or otherwise accessible to the processor 2902. Alternatively or additionally, the processor 2902 may be configured to execute hard coded functionality. As such, whether configured by hardware or software methods, or by a combination thereof, the processor 2902 may represent an entity (for example, physically embodied in circuitry) capable of performing operations according to an embodiment of the present invention while configured accordingly. Thus, for example, when the processor 2902 is embodied as an ASIC, FPGA or the like, the processor 2902 may be specifically configured hardware for conducting the operations described herein. Alternatively, as another example, when the processor 2902 is embodied as an executor of software instructions, the instructions may specifically configure the processor 2902 to perform the algorithms and/or operations described herein when the instructions are executed. However, in some cases, the processor 2902 may be a processor specific device (for example, a mobile terminal or a fixed computing device) configured to employ an embodiment of the present invention by further configuration of the processor 2902 by instructions for performing the algorithms and/or operations described herein. The processor 2902 may include, among other things, a clock, an arithmetic logic unit (ALU) and logic gates configured to support operation of the processor.

The apparatus 2900 of an example embodiment may also include a communication interface 2906 that may be any means such as a device or circuitry embodied in either hardware or a combination of hardware and software that is configured to receive and/or transmit data to/from a communications device 2906 in communication with the apparatus 2900, such as to facilitate communications with one or more user equipment or the like. In this regard, the communication interface 2906 may include, for example, an antenna (or multiple antennae) and supporting hardware and/or software for enabling communications with a wireless communication network. Additionally or alternatively, the communication interface 2906 may include the circuitry for interacting with the antenna(s) to cause transmission of signals via the antenna(s) or to handle receipt of signals received via the antenna(s). In some environments, the communication interface 2906 may alternatively or also support wired communication. As such, for example, the communication interface 2906 may include a communication modem and/or other hardware and/or software for supporting communication via cable, digital subscriber line (DSL), universal serial bus (USB) or other mechanisms.

The apparatus 2900 may also include a user interface 2908 that may in turn be in communication with the processor 2902 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor 2902 may comprise user interface circuitry configured to control at least some functions of one or more user interface elements such as a display and, in some embodiments, a plurality of speakers, a ringer, one or more microphones and/or the like. The processor 2902 and/or user interface circuitry comprising the processor may be configured to control one or more functions of one or more user interface elements through computer program instructions (for example, software and/or firmware) stored on a memory accessible to the processor (for example, memory device, and/or the like).

The user device/probe actor of some embodiments may be integrated with or otherwise on-board a vehicle whereby the apparatus may be equipped with or in communication with (e.g., via a communications interface) one or more sensors, such as a Global Navigation Satellite System (GNSS) sensor (e.g., GPS, Galileo, GLONASS, etc.), accelerometer, image sensor, inertial measurement unit (IMU), gyroscope, magnetic field sensor, etc. Any of the sensors may be used to sense information regarding the location, movement, positioning, or orientation of the apparatus for use in identifying a location of the apparatus. In some embodiments, the user device may derive information regarding location, movement, position, or orientation of the apparatus based on communication signals perceived by the communications interface such as through signal triangulation or signal fingerprinting, for example. In some embodiments, the user device may combine both sensor information and communication signals to drive a location of the user device.

## Claims

1. A computer-implemented method for providing time-valid location-based information, the method comprising:
for an environment, defining a plurality of cells (100, 200, 300, 402, 500, 600, 1000, 1708, 1808), each cell comprising:
a respective location (1004) with a range based on a geographical extent of the respective cell (1000) within the environment;
a respective predetermined validity-time-interval (2704);
respective semantic-location-data relevant to the respective location (2706);
respective executable code instructions (2708) configured to operate on the respective semantic-location-data to enable determination, in accordance with the respective predetermined validity-time-interval, of respective time-valid location-based information upon execution of the respective code instructions by a first edge computing apparatus (2900) proximal to the respective location;
wherein the respective time-valid location-based information is valid within the respective predetermined validity-time-interval and relates to any information relevant to the respective cell, including a claim of presence.

2. The method of claim 1, wherein:
the first edge computing apparatus is configured to execute the respective code instructions on the respective semantic-location-data to generate a signed certificate comprising the respective time-valid location-based information for the cell;
a second edge computing apparatus proximal to the respective location is configured to:
execute the respective code instructions on the respective semantic-location-data to generate validation information; and
when the signed certificate matches the validation information to within a predetermined threshold, validate the signed certificate to provide a validated signed certificate.

3. The method of claim 2, wherein, for a respective cell of the plurality of cells:
the respective semantic-location-data comprises presence-data representative of a first-indication-of-presence (1102) of a client-device within the geographic extent of the respective cell;
the signed certificate is representative of the first-indication-of-presence of the client-device within the geographic extent of the respective cell;
the validation information is representative of a second-indication-of-presence (1104) of the client-device within the geographic extent of the respective cell;
the signed certificate matches the validation information when an overlap between the first-indication-of-presence and the second-indication-of-presence satisfies an overlap criterion; and
when the signed certificate matches the validation information, the validated signed certificate comprises location-data representative of the location of the client-device within the respective cell.

4. The method of claim 3, further comprising, when the validated signed certificate comprises location-data representative of the location of the client-device within the respective cell, providing the client-device with access to cell-information relevant to the respective cell.

5. The method of any preceding claim, wherein the plurality of cells comprises:
a first cell;
a second cell;
a third cell; and
wherein:
the first cell is related to the second cell by a first mapping;
the second cell is related to the third cell by a second mapping;
the first cell is related to the third cell by a third mapping comprising a product of the first mapping with the second mapping; and
the third cell comprises a union of the first cell and the second cell.

6. The method of any of claims 1 to 4, wherein the plurality of cells comprises:
a first cell;
a second cell;
a third cell; and
wherein the third cell is formed from an operation on the first cell and the second cell.

7. The method of claim 6, wherein the operation comprises at least one of:
a union of the first cell and the second cell;
an intersection of the first cell and the second cell;
a relative complement of the first cell in the second cell;
a symmetric difference of the first cell and the second cell;
a distance between the first cell and the second cell; and
a selection of a pair of points from the first cell and the second cell respectively; and wherein the operation relates to: (i) the geographical extent; (ii) the predetermined validity-time-interval; or (iii) a combination of the geographical extent and the predetermined validity-time-interval, of the first cell and of the second cell.

8. The method of claim 5 or claim 6, wherein, when a validated signed certificate comprises location-data representative of a presence (1102, 1104) of a first-client-device within the first cell, providing the first-client-device access to one or more of:
second-semantic-location-data relevant to the second cell;
a second-device within the second cell;
third-semantic-location-data relevant to the third cell; and
a third-device within the third cell.

9. The method of claim 8, wherein the third cell comprises an intermediate-cell, different than the first cell and the second cell, the method comprising:
when the validated signed certificate comprises location-data representative of the presence of the first-client-device within the first cell, providing first-cell-functionality to the first-client-device; and
when the validated signed certificate comprises an intermediate signed certificate that comprises intermediate-location-data representative of a presence of the first-client-device within the intermediate cell, providing an intermediate-cell-functionality to the first-client-device, wherein the intermediate-cell-functionality is different than the first-cell-functionality.

10. The method of any preceding claim, comprising:
defining a blockchain operative on an edge computing network comprising the first edge computing apparatus;
defining a smart contract (2004, 2106, 2206) for a cell of the plurality of cells, wherein the smart contract comprises (i) the respective executable code instructions for the cell, and (ii) a scope configured to define an executability condition for the respective executable code instructions;
executing, using the first edge computing apparatus, the smart contract on the respective semantic-location-data for the cell to provide a signed certificate comprising the respective time-valid location-based information for the cell; and
writing the signed certificate into the blockchain.

11. The method of claim 10, wherein the edge computing network comprises the second edge computing apparatus, the method comprising:
executing, using the second edge computing apparatus, the smart contract on the respective semantic-location-data to provide validation information; and
when the validation information matches the signed certificate to within a predetermined threshold, writing a validated signed certificate, comprising the respective time-valid location-based information, to the blockchain.

12. A system (700, 800) configured to provide time-valid location-based information for an environment comprising a plurality of cells (100, 200, 300, 402, 500, 600, 1000, 1708, 1808), each cell comprising:
a respective location (1004) with a range based on a geographical extent of the respective cell within the environment (1000);
a respective predetermined validity-time-interval (2704);
respective semantic-location-data relevant to the respective location (2706);
respective executable code instructions (2708) configured to operate on the respective semantic-location-data to enable determination of respective time-valid location-based information;
wherein the system comprises:
a first edge computing apparatus (2900) proximal to the respective location of the respective cell of the plurality of cells, the first edge computing apparatus configured to execute the respective code instructions to enable determination, in accordance with the respective predetermined validity-time-interval, of the respective time-valid location-based information, and wherein the respective time-valid location-based information is valid within the respective predetermined validity-time-interval and relates to any information relevant to the respective cell, including a claim of presence.

13. A computer program product (2600) comprising one or more computer code instructions configured to perform the method of any of claims 1 to 11 on the system of claim 12.

14. A computer-implemented data structure (2700) for providing time-valid location-based information for an environment defined by a plurality of cells (100, 200, 300, 402, 500, 600, 1000, 1708, 1808), each cell comprising a respective location (1004) with a range based on a geographical extent of the respective cell within the environment (1000), the data structure comprising data defining:
a respective predetermined validity-time-interval (2704);
respective semantic-location-data relevant to the respective location (2706); and
respective executable code instructions (2708) configured to operate on the respective semantic-location-data to enable determination, in accordance with the respective predetermined validity-time-interval, of respective time-valid location-based information upon execution of the respective code instructions by a first edge computing apparatus (2900) proximal to the respective location;
wherein the respective time-valid location-based information is valid within the respective predetermined validity-time-interval and relates to any information relevant to the respective cell, including a claim of presence.

15. The data structure of claim 14, further comprising data defining:
a blockchain operative on an edge computing network comprising the first edge computing apparatus; and
a smart contract (2004, 2106, 2206) for a cell of the plurality of cells, wherein the smart contract comprises the respective executable code instructions for the cell.

## Patentansprüche

1. Computer-implementiertes Verfahren zur Bereitstellung zeitlich gültiger standortsbezogener Informationen, wobei das Verfahren Folgendes umfasst:
für eine Umgebung, die eine Vielzahl von Zellen (100, 200, 300, 402, 500, 600, 1000, 1708, 1808) definiert, umfasst jede Zelle Folgendes:
einen jeweiligen Standort (1004) mit einem Bereich, der auf einer geografischen Ausdehnung der jeweiligen Zelle (1000) innerhalb der Umgebung basiert;
ein entsprechendes vorbestimmtes Gültigkeitszeitintervall (2704);
jeweilige semantische Standortdaten, die für den jeweiligen Standort relevant sind (2706);
jeweilige ausführbare Codeanweisungen (2708), die so konfiguriert sind, dass sie auf die jeweiligen semantischen Standortdaten einwirken, um in Übereinstimmung mit dem jeweiligen vorbestimmten Gültigkeitszeitintervall die Bestimmung jeweiliger zeitlich gültiger standortsbezogener Informationen bei Ausführung der jeweiligen Codeanweisungen durch eine erste Edge-Computing-Vorrichtung (2900) in der Nähe des jeweiligen Standorts zu ermöglichen;
wobei die jeweilige zeitlich gültige standortsbezogene Information innerhalb des jeweiligen vorbestimmten Gültigkeitszeitintervalls gültig ist und sich auf jede für die jeweilige Zelle relevante Information, einschließlich einer Präsenzangabe, bezieht.

2. Verfahren nach Anspruch 1, wobei:
die erste Edge-Computing-Vorrichtung so konfiguriert ist, dass sie die jeweiligen Codebefehle an den jeweiligen semantischen Standortdaten ausführt, um ein signiertes Zertifikat zu erzeugen, das die jeweiligen zeitlich gültigen standortsbezogenen Informationen für die Zelle umfasst;
eine zweite Edge-Computing-Vorrichtung in der Nähe des jeweiligen Standortes ist so konfiguriert, dass sie:
die jeweiligen Codeanweisungen auf den jeweiligen semantischen Standortsdaten auszuführt, um Validierungsinformationen zu erzeugen; und
wenn das signierte Zertifikat mit den Validierungsinformationen innerhalb eines vorbestimmten Schwellenwertes übereinstimmt, das signierte Zertifikat validiert, um ein validiertes signiertes Zertifikat bereitzustellen.

3. Verfahren nach Anspruch 2, wobei für eine jeweilige Zelle der Vielzahl von Zellen:
die jeweiligen semantischen Standortdaten Präsenzdaten umfassen, die für eine erste Präsenzanzeige (1102) eines Client-Geräts innerhalb der geografischen Ausdehnung der jeweiligen Zelle repräsentativ sind;
das signierte Zertifikat repräsentativ für die erste Präsenzanzeige des Client-Geräts innerhalb der geografischen Ausdehnung der jeweiligen Zelle ist;
die Validierungsinformationen repräsentativ für eine zweite Präsenzanzeige (1104) des Client-Geräts innerhalb der geografischen Ausdehnung der jeweiligen Zelle sind;
das signierte Zertifikat mit den Validierungsinformationen übereinstimmt, wenn eine Überlappung zwischen der ersten Präsenzanzeige und der zweiten Präsenzanzeige ein Überlappungskriterium erfüllt; und
wenn das signierte Zertifikat mit den Validierungsinformationen übereinstimmt, umfasst das validierte signierte Zertifikat Standortdaten, die für den Standort des Client-Geräts innerhalb der jeweiligen Zelle repräsentativ sind.

4. Verfahren nach Anspruch 3, das ferner, wenn das validierte, signierte Zertifikat Standortdaten umfasst, die den Standort des Client-Geräts in der jeweiligen Zelle darstellen, das Bereitstellen dem Client-Gerät des Zugriffs auf Zellinformationen, die für die jeweilige Zelle relevant sind, umfasst.

5. Verfahren nach einem der vorhergehenden Ansprüche, wobei die Vielzahl von Zellen Folgendes umfasst:
eine erste Zelle;
eine zweite Zelle;
eine dritte Zelle; und
wobei:
die erste Zelle mit der zweiten Zelle durch eine erste Abbildung verbunden ist;
die zweite Zelle mit der dritten Zelle durch eine zweite Abbildung verbunden ist;
die erste Zelle mit der dritten Zelle durch eine dritte Abbildung in Beziehung steht, die ein Produkt aus der ersten Abbildung und der zweiten Abbildung ist; und
die dritte Zelle aus einer Vereinigung der ersten Zelle und der zweiten Zelle besteht.

6. Verfahren nach einem der Ansprüche 1 bis 4, wobei die Vielzahl von Zellen Folgendes umfasst:
eine erste Zelle;
eine zweite Zelle;
eine dritte Zelle; und
wobei die dritte Zelle aus einer Operation an der ersten Zelle und der zweiten Zelle gebildet wird.

7. Verfahren nach Anspruch 6, wobei die Operation mindestens eines der folgenden Elemente umfasst:
eine Vereinigung der ersten Zelle und der zweiten Zelle;
einen Schnittpunkt zwischen der ersten Zelle und der zweiten Zelle;
ein relatives Komplement der ersten Zelle in der zweiten Zelle;
eine symmetrische Differenz zwischen der ersten und der zweiten Zelle;
einen Abstand zwischen der ersten Zelle und der zweiten Zelle; und
eine Auswahl eines Punktpaares aus der ersten Zelle bzw. der zweiten Zelle; und
wobei sich die Operation auf die folgenden Punkte bezieht: (i) die geografische Ausdehnung; (ii) das vorbestimmte Gültigkeitsintervall; oder (iii) eine Kombination aus der geografischen Ausdehnung und dem vorbestimmten Gültigkeitsintervall der ersten Zelle und der zweiten Zelle.

8. Verfahren nach Anspruch 5 oder Anspruch 6, wobei, wenn ein validiertes, signiertes Zertifikat Standortdaten umfasst, die für die Präsenz (1102, 1104) eines ersten Client-Geräts innerhalb der ersten Zelle repräsentativ sind, dem ersten Client-Gerät Zugang zu einem oder mehreren der folgenden Elemente gewährt wird:
sekundär-semantische Standortsdaten, die für die zweite Zelle relevant sind;
ein zweites Gerät innerhalb der zweiten Zelle;
dritt-semantische Standortsdaten, die für die dritte Zelle relevant sind;
ein drittes Gerät innerhalb der dritten Zelle.

9. Verfahren nach Anspruch 8, wobei die dritte Zelle eine Zwischenzelle umfasst, die sich von der ersten Zelle und der zweiten Zelle unterscheidet, wobei das Verfahren Folgendes umfasst:
wenn das validierte, signierte Zertifikat Standortdaten umfasst, die die Präsenz des ersten Client-Geräts innerhalb der ersten Zelle darstellen, Bereitstellen der Erstzellen-Funktionalität für das erste Client-Gerät; und
wenn das validierte, signierte Zertifikat ein signiertes Zwischenzertifikat umfasst, das Zwischenstandortdaten umfasst, die für eine Präsenz des ersten Client-Geräts innerhalb der Zwischenzelle repräsentativ sind, Bereitstellen einer Zwischenzellenfunktionalität für das erste Client-Gerät, wobei sich die Zwischenzellenfunktionalität von der Erstzellenfunktionalität unterscheidet.

10. Verfahren nach einem der vorangegangenen Ansprüche, welches Folgendes umfasst:
Definieren einer Blockchain, die in einem Edge-Computing-Netzwerk betrieben wird, das die erste Edge-Computing-Vorrichtung umfasst;
Definieren eines intelligenten Vertrags (2004, 2106, 2206) für eine Zelle der Vielzahl von Zellen, wobei der intelligente Vertrag (i) die jeweiligen ausführbaren Codeanweisungen für die Zelle und (ii) einen Geltungsbereich umfasst, der konfiguriert ist, um eine Ausführbarkeitsbedingung für die jeweiligen ausführbaren Codeanweisungen zu definieren;
Ausführen, unter Verwendung der ersten Edge-Computing-Vorrichtung, des intelligenten Vertrags auf den jeweiligen semantischen Standortdaten für die Zelle, um ein signiertes Zertifikat bereitzustellen, das die jeweiligen zeitlich gültigen standortsbezogenen Informationen für die Zelle umfasst; und
schreiben des signierten Zertifikats in die Blockchain.

11. Verfahren nach Anspruch 10, wobei das Edge-Computing-Netzwerk die zweite Edge-Computing-Vorrichtung umfasst, wobei das Verfahren Folgendes umfasst:
Ausführen, unter Verwendung der zweiten Edge-Computing-Vorrichtung, des intelligenten Vertrags auf den jeweiligen semantischen Standortdaten, um Validierungsinformationen bereitzustellen; und
wenn die Validierungsinformationen mit dem signierten Zertifikat innerhalb eines vorbestimmten Schwellenwerts übereinstimmen, Schreiben in die Blockchain eines validierten, signierten Zertifikats, das die jeweiligen zeitlich gültigen standortsbezogenen Informationen enthält.

12. System (700, 800), das so konfiguriert ist, dass es zeitlich gültige standortsbezogene Informationen für eine Umgebung bereitstellt, die eine Vielzahl von Zellen (100, 200, 300, 402, 500, 600, 1000, 1708, 1808) umfasst, wobei jede Zelle Folgendes umfasst:
einen jeweiligen Standort (1004) mit einem Bereich, der auf einer geografischen Ausdehnung der jeweiligen Zelle innerhalb der Umgebung (1000) basiert;
ein entsprechendes vorbestimmtes Gültigkeitszeitintervall (2704);
jeweilige semantische Standortdaten, die für den jeweiligen Standort relevant sind (2706);
jeweilige ausführbare Codeanweisungen (2708), die so konfiguriert sind, dass sie auf die jeweiligen semantischen Standortsdaten einwirken, um die Bestimmung der jeweiligen zeitlich gültigen standortsbezogenen Informationen zu ermöglichen;
wobei das System Folgendes umfasst:
eine erste Edge-Computing-Vorrichtung (2900) in der Nähe des jeweiligen Standorts der jeweiligen Zelle der Vielzahl von Zellen, wobei die erste Edge-Computing-Vorrichtung so konfiguriert ist, dass sie die jeweiligen Code-Befehle ausführt, um in Übereinstimmung mit dem jeweiligen vorbestimmten Gültigkeits-Zeit-Intervall die Bestimmung der jeweiligen zeitlich gültigen standortbasierten Informationen zu ermöglichen, und wobei die jeweiligen zeitlich gültigen standortbasierten Informationen innerhalb des jeweiligen vorbestimmten Gültigkeits-Zeit-Intervalls gültig sind und sich auf jegliche Informationen beziehen, die für die jeweilige Zelle relevant sind, einschließlich einer Präsenzangabe.

13. Computerprogrammprodukt (2600), das einen oder mehrere Computercodebefehle umfasst, die so konfiguriert sind, dass sie das Verfahren nach einem der Ansprüche 1 bis 11 auf dem System nach Anspruch 12 durchführen.

14. Computer-implementierte Datenstruktur (2700) zum Bereitstellen zeitlich gültiger standortsbezogener Informationen für eine Umgebung, die durch eine Vielzahl von Zellen (100, 200, 300, 402, 500, 600, 1000, 1708, 1808) definiert ist, wobei jede Zelle einen jeweiligen Standort (1004) mit einem Bereich umfasst, der auf einer geographischen Ausdehnung der jeweiligen Zelle innerhalb der Umgebung (1000) basiert, wobei die Datenstruktur Daten umfasst, die Folgendes definieren:
ein entsprechendes vorbestimmtes Gültigkeitszeitintervall (2704);
jeweilige semantische Standortdaten, die für den jeweiligen Standort relevant sind (2706);
und
jeweilige ausführbare Codeanweisungen (2708), die so konfiguriert sind, dass sie auf die jeweiligen semantischen Standortdaten einwirken, um in Übereinstimmung mit dem jeweiligen vorbestimmten Gültigkeitszeitintervall die Bestimmung jeweiliger zeitlich gültiger standortsbezogener Informationen bei Ausführung der jeweiligen Codeanweisungen durch eine erste Edge-Computing-Vorrichtung (2900) in der Nähe des jeweiligen Standorts zu ermöglichen;
wobei die jeweilige zeitlich gültige standortsbezogene Information innerhalb des jeweiligen vorbestimmten Gültigkeitszeitintervalls gültig ist und sich auf jede für die jeweilige Zelle relevante Information, einschließlich einer Präsenzangabe, bezieht.

15. Die Datenstruktur nach Anspruch 14 umfasst ferner das Definieren von folgenden Daten:
eine Blockchain, die in einem Edge-Computing-Netzwerk betrieben wird, das die erste Edge-Computing-Vorrichtung umfasst; und
einen intelligenten Vertrag (2004, 2106, 2206) für eine Zelle der Vielzahl von Zellen, wobei der intelligente Vertrag die jeweiligen ausführbaren Codeanweisungen für die Zelle umfasst.

## Revendications

1. Procédé implémenté par ordinateur permettant de fournir des informations d'emplacement valides dans le temps, le procédé comprenant :
pour un environnement, définissant une pluralité de cellules (100, 200, 300, 402, 500, 600, 1000, 1708, 1808), chaque cellule comprenant :
un emplacement respectif (1004) avec une portée sur la base d'une étendue géographique de la cellule respective (1000) dans l'environnement ;
un intervalle de temps de validité prédéterminé respectif (2704) ;
des données d'emplacement sémantique respectives pertinentes pour l'emplacement respectif (2706) ;
des instructions de code exécutable respectives (2708) configurées pour fonctionner sur les données d'emplacement sémantique respectives afin d'activer la détermination, conformément à l'intervalle de temps de validité prédéterminé respectif, d'informations d'emplacement valides dans le temps respectives lors de l'exécution des instructions de code respectives par un premier appareil d'informatique en périphérie (2900) à proximité de l'emplacement respectif ;
dans lequel les informations d'emplacement valides dans le temps respectives sont valides dans l'intervalle de temps de validité prédéterminé respectif et se rapportent à toutes les informations pertinentes pour la cellule respective, y compris une revendication de présence.

2. Procédé selon la revendication 1, dans lequel :
le premier appareil d'informatique en périphérie est configuré pour exécuter les instructions de code respectives sur les données d'emplacement sémantique respectives afin de générer un certificat signé comprenant les informations d'emplacement valides dans le temps respectives pour la cellule ;
un second appareil d'informatique en périphérie à proximité de l'emplacement respectif est configuré pour :
exécuter les instructions de code respectives sur les données d'emplacement sémantique respectives afin de générer des informations de validation ; et
lorsque le certificat signé correspond aux informations de validation conformément à un seuil prédéterminé, valider le certificat signé afin de fournir un certificat signé validé.

3. Procédé selon la revendication 2, dans lequel, pour une cellule respective parmi la pluralité de cellules :
les données d'emplacement sémantique respectives comprennent des données de présence représentatives d'une première indication de présence (1102) d'un dispositif client dans l'étendue géographique de la cellule respective ;
le certificat signé est représentatif de la première indication de présence du dispositif client dans l'étendue géographique de la cellule respective ;
les informations de validation sont représentatives d'une seconde indication de présence (1104) du dispositif client dans l'étendue géographique de la cellule respective ;
le certificat signé correspond aux informations de validation lorsqu'un chevauchement entre la première indication de présence et la seconde indication de présence satisfait à un critère de chevauchement ; et
lorsque le certificat signé correspond aux informations de validation, le certificat signé validé comprend des données d'emplacement représentatives de l'emplacement du dispositif client dans la cellule respective.

4. Procédé selon la revendication 3, comprenant en outre, lorsque le certificat signé validé comprend des données d'emplacement représentatives de l'emplacement du dispositif client dans la cellule respective, la fourniture au dispositif client de l'accès aux informations de cellule pertinentes pour la cellule respective.

5. Procédé selon l'une quelconque revendication précédente, dans lequel la pluralité de cellules comprend :
une première cellule ;
une deuxième cellule ;
une troisième cellule ; et
dans lequel :
la première cellule est reliée à la deuxième cellule par un premier mappage ;
la deuxième cellule est reliée à la troisième cellule par un deuxième mappage ;
la première cellule est reliée à la troisième cellule par un troisième mappage comprenant le produit du premier mappage et du deuxième mappage ; et
la troisième cellule comprend une union de la première cellule et de la deuxième cellule.

6. Procédé selon l'une quelconque des revendications précédentes 1 à 4, dans lequel la pluralité de cellules comprend :
une première cellule ;
une deuxième cellule ;
une troisième cellule ; et
dans lequel la troisième cellule est formée à partir d'une opération sur la première cellule et la deuxième cellule.

7. Procédé selon la revendication 6, dans lequel l'opération comprend au moins l'un parmi :
une union de la première cellule et de la deuxième cellule ;
une intersection de la première cellule et de la deuxième cellule ;
un complément relatif de la première cellule dans la deuxième cellule ;
une différence symétrique entre la première cellule et la deuxième cellule ;
une distance entre la première cellule et la deuxième cellule ; et
une sélection d'une paire de points à partir de la première cellule et la deuxième cellule respectivement ;
et dans lequel l'opération se rapporte à : (i) l'étendue géographique ; (ii) l'intervalle de temps de validité prédéterminé ; ou (iii) une combinaison de l'étendue géographique et de l'intervalle de temps de validité prédéterminé, de la première cellule et de la deuxième cellule.

8. Procédé selon la revendication 5 ou la revendication 6, dans lequel, lorsqu'un certificat signé validé comprend des données d'emplacement représentatives d'une présence (1102, 1104) d'un premier dispositif client dans la première cellule, la fourniture au premier dispositif client de l'accès à un ou plusieurs parmi :
les deuxièmes données d'emplacement sémantique pertinentes pour la deuxième cellule ;
un deuxième dispositif dans la deuxième cellule ;
les troisièmes données d'emplacement sémantique pertinentes pour la troisième cellule ; et
un troisième dispositif dans la troisième cellule.

9. Procédé selon la revendication 8, dans lequel la troisième cellule comprend une cellule intermédiaire, différente de la première cellule et de la deuxième cellule, le procédé comprenant :
lorsque le certificat signé validé comprend des données d'emplacement représentatives de la présence du premier dispositif client dans la première cellule, la fourniture d'une première fonctionnalité de cellule au premier dispositif client ; et
lorsque le certificat signé validé comprend un certificat signé intermédiaire qui comprend des données d'emplacement intermédiaires représentatives de la présence du premier dispositif client dans la cellule intermédiaire, la fourniture d'une fonctionnalité de cellule intermédiaire au premier dispositif client, dans lequel la fonctionnalité de cellule intermédiaire est différente de la première fonctionnalité de cellule.

10. Procédé selon l'une quelconque revendication précédente, comprenant :
la définition d'une chaîne de blocs fonctionnant sur un réseau d'informatique en périphérie comprenant le premier appareil d'informatique en périphérie ;
la définition d'un contrat intelligent (2004, 2106, 2206) pour une cellule parmi la pluralité de cellules, dans lequel le contrat intelligent comprend (i) les instructions de code exécutable respectives pour la cellule, et (ii) une étendue configurée pour définir une condition d'exécutabilité pour les instructions de code exécutable respectives ;
l'exécution, à l'aide du premier appareil d'informatique en périphérie, du contrat intelligent sur les données d'emplacement sémantique respectives pour la cellule afin de fournir un certificat signé comprenant les informations d'emplacement valides dans le temps respectives pour la cellule ; et
l'écriture du certificat signé dans la chaîne de blocs.

11. Procédé selon la revendication 10, dans lequel le réseau d'informatique en périphérie comprend le second appareil d'informatique en périphérie, le procédé comprenant :
l'exécution, à l'aide du second appareil d'informatique en périphérie, du contrat intelligent sur les données d'emplacement sémantique respectives afin de fournir des informations de validation ; et
lorsque les informations de validation correspondent au certificat signé conformément à un seuil prédéterminé, l'écriture d'un certificat signé validé, comprenant les informations d'emplacement valides dans le temps respectives, dans la chaîne de blocs.

12. Système (700, 800) configuré pour fournir des informations d'emplacement valides dans le temps pour un environnement comprenant une pluralité de cellules (100, 200, 300, 402, 500, 600, 1000, 1708, 1808), chaque cellule comprenant :
un emplacement respectif (1004) avec une portée sur la base d'une étendue géographique de la cellule respective dans l'environnement (1000) ;
un intervalle de temps de validité prédéterminé respectif (2704) ;
des données d'emplacement sémantique respectives pertinentes pour l'emplacement respectif (2706) ;
des instructions de code exécutable respectives (2708) configurées pour fonctionner sur les données d'emplacement sémantique respectives afin d'activer la détermination d'informations d'emplacement valides dans le temps respectives ;
dans lequel le système comprend :
un premier appareil d'informatique en périphérie (2900) à proximité de l'emplacement respectif de la cellule respective parmi la pluralité de cellules, le premier appareil d'informatique en périphérie configuré pour exécuter les instructions de code respectives afin d'activer la détermination, conformément à l'intervalle de temps de validité prédéterminé respectif, des informations d'emplacement valides dans le temps, et dans lequel les informations d'emplacement valides dans le temps respectives sont valides dans l'intervalle de temps de validité prédéterminé respectif et se rapportent à toutes les informations pertinentes pour la cellule respective, y compris une revendication de présence.

13. Produit de programme informatique (2600) comprenant une ou plusieurs instructions de code informatique configurées pour réaliser le procédé selon l'une quelconque des revendications 1 à 11 sur le système selon la revendication 12.

14. Structure de données implémentée par ordinateur (2700) permettant de fournir des informations d'emplacement valides dans le temps pour un environnement défini par une pluralité de cellules (100, 200, 300, 402, 500, 600, 1000, 1708, 1808), chaque cellule comprenant un emplacement respectif (1004) avec une portée sur la base d'une étendue géographique de la cellule respective dans l'environnement (1000), la structure de données comprenant des données définissant :
un intervalle de temps de validité prédéterminé respectif (2704) ;
des données d'emplacement sémantique respectives pertinentes pour l'emplacement respectif (2706) ; et
des instructions de code exécutable respectives (2708) configurées pour fonctionner sur les données d'emplacement sémantique respectives afin d'activer la détermination, conformément à l'intervalle de temps de validité prédéterminé respectif, d'informations d'emplacement valides dans le temps respectives lors de l'exécution des instructions de code respectives par un premier appareil d'informatique en périphérie (2900) à proximité de l'emplacement respectif ;
dans lequel les informations d'emplacement valides dans le temps respectives sont valides dans l'intervalle de temps de validité prédéterminé respectif et se rapportent à toutes les informations pertinentes pour la cellule respective, y compris une revendication de présence.

15. Structure de données selon la revendication 14, comprenant en outre des données définissant :
une chaîne de blocs fonctionnant sur un réseau d'informatique en périphérie comprenant le premier appareil d'informatique en périphérie ; et
un contrat intelligent (2004, 2106, 2206) pour une cellule parmi la pluralité de cellules, dans lequel le contrat intelligent comprend les instructions de code exécutables respectives pour la cellule.
